# EUROPEAN PATENT SPECIFICATION

(11) **EP 2 362 643 B1**
(45) Date of publication and mention of the grant of the patent: **08.11.2017**
(21) Application number: 11154132.2
(22) Date of filing: 11.02.2011
(51) Int. Cl.: H04N 5/44, H04N 5/765, H04N 7/12, H04N 7/16, G09G 5/00, G06F 3/00, G11B 20/00

(54) **Content reproduction system, content receiving apparatus, sound reproduction apparatus, content reproduction method and program**
Inhaltswiedergabesystem, Inhaltsempfangsvorrichtung, Tonwiedergabevorrichtung, Inhaltswiedergabeverfahren und Programm
Système de reproduction de contenu, appareil de réception de contenu, appareil de reproduction sonore, procédé de reproduction de contenu et programme

(30) Priority: 22.02.2010 JP 2010036148
(43) Date of publication of application: 31.08.2011
(73) Proprietor: Sony Corporation, Tokyo 108-0075 (JP)
(72) Inventor: Toba, Kazuaki, Minato-ku Tokyo 108-0075 (JP); Ichimura, Gen, Minato-ku Tokyo 108-0075 (JP)
(74) Representative: D Young & Co LLP

(56) References cited:
- EP-A2- 1 840 868
- WO-A1-2009/066634
- WO-A1-2009/139386
- JP-A- 2008 187 586

## Description

### Field of the Invention

The present invention relates to a content reproduction system, a content receiving apparatus, a sound reproduction apparatus, a content reproduction method, and a program.

### Background of the Invention

In recent years, as AV (Audio/Video) devices handling a digital signal such as an audio signal and a video signal become increasingly available, various systems of interface to transmit the digital signal between these AV devices have been proposed. Among such interfaces, for example, the IEEE (Institute of Electrical and Electronics Engineers) 1394 standard and the HDMI (High-Definition Multimedia Interface) standard (HDMI is a registered trademark) are widely known (see, for example, Japanese Patent Application Laid-Open No. 2007-267116).

In the meantime, technologies to enable high-quality AV reproduction by, for example, transmitting audio data from a television apparatus to an audio device and reproducing the audio data by the audio device have been proposed in reproducing contents. For example, a technology capable of reproducing high-quality AV on both sending and receiving sides and also solving an issue of lip-sync shift by transmitting, for example, video data, audio data, additional data, and a video clock from the sending side to the receiving side and additional data and a video clock from the receiving side to the sending side and adjusting the clock rate of the video data and/or the audio data by using the video clock generated on the receiving side and transmitted to the sending side or the additional data thereof to set the receiving side as a master clock and to synchronize a sending-side clock therewith continuously is proposed (see, for example, Japanese Patent Application Laid-Open No. 2008-187586).

### Summary of the Invention

Various respective aspects and features of the invention are defined in the appended claims. Combinations of features from the dependent claims may be combined with features of the independent claims as appropriate and not merely as explicitly set out in the claims.

In normal reproduction of broadcast wave content, reproduction of broadcast wave content is realized by decoding a stream such as MPEG-TS demodulated by a receiving tuner unit of a television apparatus, set stop box (STB) or the like by a decoding unit. The standard clock used by the decoding unit for decoding a stream is normally generated as a synchronization clock of 27 MHz by adjusting PLL (Phase Locked Loop) or the like held a decoding apparatus based on time information (time stamp) contained .in the stream. Then, a standard clock for reproducing video data or a standard clock for reproducing audio data is generated from the generated synchronization clock of 27 MHz. Thus, in reproduction of broadcast wave content, the receiving apparatus side of broadcast wave content needs to be the master of the standard clock to decode a stream.

In reproduction of audio data, on the other hand, sound quality is very sensitive to quality of the standard clock used for decoding audio data and jitter component or the like significantly affects the sound quality. Thus, an audio device normally has a clock generator capable of generating a very high-quality clock mounted thereon.

Therefore, there is an issue in reproduction of broadcast wave content that even if a clock generator capable of generating a very high-quality clock is mounted on an audio device, it is difficult to improve reproduction quality of particularly audio data.

In view of the foregoing, it is desirable to provide a content reproduction system capable of improving reproduction quality of particularly audio data, a content receiving apparatus, a sound reproduction system, a content reproduction method, and a program.

According to an embodiment of the present invention, there is provided a content reproduction system including a content receiving apparatus including a demodulating unit that receives and demodulates broadcast wave content, a storage unit that stores a stream as a demodulation result by the demodulating unit, a decoding unit that reads, from the storage unit, the stream stored in the storage unit, and that decodes the read stream, a transmitting unit that transmits audio data of a decoding result by the decoding unit to a sound reproduction apparatus via a transmission path, and a first transmitting/receiving unit capable of transmitting/receiving a clock signal used for decoding the stream by the decoding unit to/from the sound reproduction apparatus via the transmission path, and the sound reproduction apparatus including a receiving unit that receives the audio data transmitted by the transmitting unit via the transmission path, and a second transmitting/receiving unit capable of transmitting/receiving the clock signal used for decoding the stream by the decoding unit to/from the content receiving apparatus via the transmission path.

The second transmitting/receiving unit may transmit the clock signal generated by a clock signal generator included in the sound reproduction apparatus to the content receiving apparatus as the clock signal used by the decoding unit for decoding the stream. The first transmitting/receiving unit may receive the clock signal transmitted by the second transmitting/receiving unit. The decoding unit may use the clock signal received by the first transmitting/receiving unit as the clock signal used for decoding the stream.

If the clock signal generated by a clock signal generator included in the content receiving apparatus is more precise than the clock signal generated by a clock signal generator included in the sound reproduction apparatus, the decoding unit may use the clock signal generated by the clock signal generator included in the content receiving apparatus as the clock signal used for decoding the stream. The first transmitting/receiving unit may transmit the clock signal generated by the clock signal generator included in the content receiving apparatus to the sound reproduction apparatus. The second transmitting/receiving unit may receive the clock signal transmitted by the first transmitting/receiving unit.

The decoding unit may reset storage content of the storage unit or insert the same video and audio data as video and audio data immediately before based on the decoding result of the stream.

According to another embodiment of the present invention, there is provided a content receiving apparatus including a demodulating unit that receives and demodulates broadcast wave content, a storage unit that stores a stream as a demodulation result by the demodulating unit, a decoding unit that reads, from the storage unit, the stream stored in the storage unit, and that decodes the read stream, a transmitting unit that transmits audio data of a decoding result by the decoding unit to a sound reproduction apparatus via a transmission path, and a transmitting/receiving unit capable of transmitting/receiving a clock signal used for decoding the stream by the decoding unit to/from the sound reproduction apparatus via the transmission path.

According to another embodiment of the present invention, there is provided a sound reproduction apparatus including a receiving unit that receives audio data transmitted from a content receiving apparatus that receives broadcast wave content via a transmission path, and a transmitting/receiving unit capable of transmitting/receiving a clock signal used for decoding a stream by a decoding unit included in the content receiving apparatus to decode the stream as a demodulation result of the broadcast wave content to/from the content receiving apparatus via the transmission path.

According to another embodiment of the present invention, there is provided a content reproduction method, including the steps of receiving and demodulating broadcast wave content by a content receiving apparatus, storing a stream as a demodulation result by the content receiving apparatus, reading and decoding the stored stream by the content receiving apparatus, transmitting audio data of a decoding result to a sound reproduction apparatus via a transmission path by the content receiving apparatus, transmitting/receiving a clock signal used for decoding the stream to/from the sound reproduction apparatus via the transmission path by the content receiving apparatus, receiving the audio data transmitted via the transmission path by the sound reproduction apparatus, and transmitting/receiving the clock signal used for decoding the stream to/from the content receiving apparatus via the transmission path by the sound reproduction apparatus.

According to another embodiment of the present invention, there is provided a program causing a content receiving apparatus to function as a demodulating unit that receives and demodulates broadcast wave content, a storage unit that stores a stream as a demodulation result by the demodulating unit, a decoding unit that reads, from the storage unit, the stream stored in the storage unit, and that decodes the read stream, a transmitting unit that transmits audio data of a decoding result by the decoding unit to a sound reproduction apparatus via a transmission path, and a first transmitting/receiving unit capable of transmitting/receiving a clock signal used for decoding the stream by the decoding unit to/from the sound reproduction apparatus via the transmission path, and the sound reproduction apparatus to function as a receiving unit that receives the audio data transmitted by the transmitting unit via the transmission path, and a second transmitting/receiving unit capable of transmitting/receiving the clock signal used for decoding the stream by the decoding unit to/from the content receiving apparatus via the transmission path.

According to the embodiments of the present invention described above, reproduction quality of particularly audio data can be improved in reproduction of broadcast wave content.

### Brief Description of the Drawings

Embodiments of the invention will now be described with reference to the accompanying drawings, throughout which like parts are referred to by like references, and in which:
FIG. 1 is a diagram schematically showing a configuration of an AV system according to a first embodiment of the present invention;
FIG. 2 is a block diagram schematically showing the configuration of the AV system in FIG. 1;
FIG. 3 is a block diagram showing a configuration example of an HDMI transmitting unit (HDMI source) and an HDMI receiving unit (HDMI sink);
FIG. 4 is a block diagram showing a configuration example of an HDMI transmitter and an HDMI receiver;
FIG. 5 is a diagram showing the configuration of TMDS transmission data;
FIG. 6 is a diagram showing a pin configuration (type A) of an HDMI terminal;
FIG. 7 is a diagram showing a frame configuration in an SPDIF standard;
FIG. 8 is a diagram showing a sub-frame configuration in the SPDIF standard;
FIG 9 is a diagram showing a signal modulation method in the SPDIF standard;
FIG. 10 is a diagram showing channel coding of a preamble in the SPDIF standard;
FIG. 11 is a diagram showing a format of channel status in the SPDIF standard;
FIG. 12 is a diagram showing the format of user data in the SPDIF standard;
FIG. 13 is a connection diagram showing a configuration example of a source-side transmitting/receiving circuit, a plug connection detection circuit and the like of a source device in a first embodiment;
FIG. 14 is a connection diagram showing a configuration example of a sink-side transmitting/receiving circuit, the plug connection detection circuit and the like of a sink device in the first embodiment;
FIG. 15 is a diagram summarizing operations using a Utility line and an HPD line in the embodiment;
FIG. 16 is a diagram showing the configuration of CEC data transmitted on a CEC line;
FIG. 17 is a diagram showing a configuration example of a header block;
FIG. 18 is a diagram showing logical addresses set according to a type of each device of HDMI;
FIG. 19 is a flow chart of transmission/reception processing of a clock signal performed by the source device in the AV system in FIG. 2;
FIG. 20 is a flow chart of transmission/reception processing of the clock signal performed by the sink device in the AV system in FIG. 2;
FIG. 21 is a diagram showing a sequence example of authentication and key exchange processing;
FIG. 22 is a diagram schematically showing the configuration of an AV system according to a second embodiment of the present invention;
FIG. 23 is a block diagram schematically showing the configuration of the AV system in FIG. 22;
FIG. 24 is a connection diagram showing a configuration example of the source-side transmitting/receiving circuit, the plug connection detection circuit and the like of the source device in the second embodiment; and
FIG. 25 is a connection diagram showing a configuration example of the sink-side transmitting/receiving circuit, the plug connection detection circuit and the like of the sink device in the second embodiment.

### Description of the Example Embodiments

Hereinafter, example embodiments of the present invention will be described in detail with reference to the appended drawings. Note that, in this specification and the appended drawings, structural elements that have substantially the same function and structure are denoted with the same reference numerals, and repeated explanation of these structural elements is omitted.

The description will be provided in the order shown below:
1. First Embodiment (form in which sound is output from the side of a source device)
2. Second Embodiment (form in which sound is output from the side of a repeater device)

### <1. First Embodiment>

### [Configuration example of the AV system]

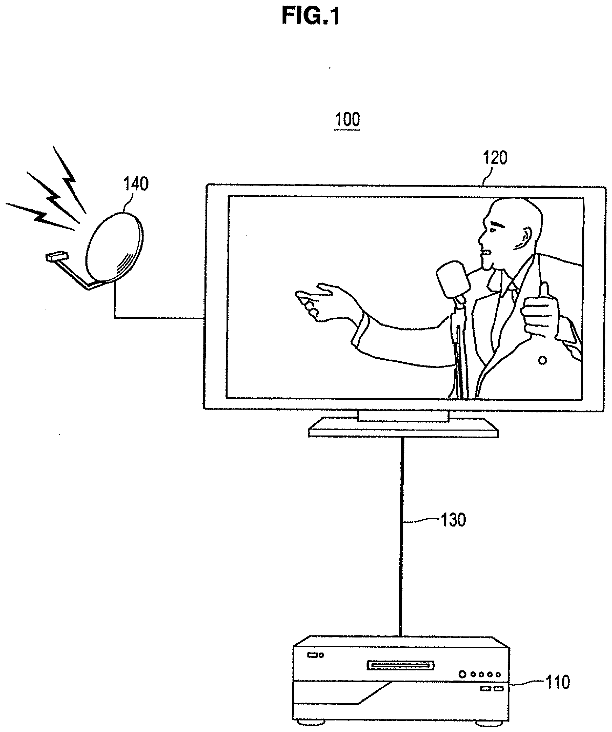

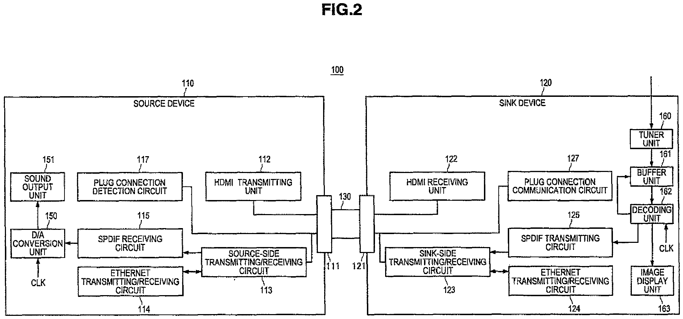

First, an AV system according to a first embodiment of the present invention will be described. FIG. 1 is a diagram schematically showing the configuration of an AV system according to the first embodiment of the present invention. FIG. 2 is a block diagram schematically showing the configuration of the AV system in FIG. 1.

In FIGS. 1 and 2, an AV system 100 is a system capable of reproducing broadcast wave content and includes a source device 110 such as an audio device and a sink device 120 such as a television apparatus. In the AV system 100, the source device 110 and the sink device 120 are HDMI HEAC (HDMI Ethernet and Audio Return Channel) compatible devices. An HDMI HEAC compatible device means having a communication unit that performs communication using a communication path with an HEAC+ line and HEAC- line constituting an HDMI cable.

The source device 110 and the sink device 120 are connected via an HDMI cable 130. That is, the source device 110 includes an HDMI terminal 111 and the sink device 120 includes an HDMI terminal 121. One end of the HDMI cable 130 is connected to the HDMI terminal 111 of the source device 110 and the other end of the HDMI cable 130 to the HDMI terminal 121 of the sink device 120. The sink device 120 also includes an antenna 140 to receive broadcast wave content.

The source device 110 includes an HDMI transmitting unit 112, a source-side transmitting/receiving circuit 113, and a plug connection detection circuit 117 that are connected to the HDMI terminal 111. An Ethernet transmitting/receiving circuit 114 and an SPDIF receiving circuit 115 are connected to the source-side transmitting/receiving circuit 113.

The HDMI transmitting unit 112 sends out baseband video (image) and audio data by communication conforming to HDMI from the HDMI terminal 111. Details of the HDMI transmitting unit 112 will be described later.

The source-side transmitting/receiving circuit 113 interfaces an Ethernet signal transmitted by using the HEAC+ line and HEAC- line constituting the HDMI cable 130 between the Ethernet transmitting/receiving circuit 114 and the HDMI cable 130. The source-side transmitting/receiving circuit 113 also interfaces an SPDIF signal transmitted by using the HEAC+ line and HEAC-line constituting the HDMI cable 130 between the SPDIF receiving circuit 115 and the HDMI cable 130. Details of the source-side transmitting/receiving circuit 113 will be described later.

The SPDIF receiving circuit 115 is a circuit to receive an SPDIF signal. The SPDIF receiving circuit 115 includes a receiving unit conforming to the SPDIF standard. Details of the SPDIF receiving circuit 115 will be described later. The Ethernet transmitting/receiving circuit 114 is a circuit to transmit/receive an Ethernet signal and performs bi-directional communication conforming to, for example, the Internet protocol (IP). In this case, TCP (Transmission Control Protocol) or UDP (User Datagram Protocol) can be used as an upper layer of the Internet protocol (IP).

The plug connection detection circuit 117 detects connection of the sink device 120 by comparing the potential of a terminal connected to an HPD line of the HDMI cable 130 with a reference potential.

The sink device 120 includes an HDMI receiving unit 122, a sink-side transmitting/receiving circuit 123, and a plug connection communication circuit 127 that are connected to the HDMI terminal 121. An Ethernet transmitting/receiving circuit 124 and an SPDIF transmitting circuit 125 are connected to the sink-side transmitting/receiving circuit 123.

The HDMI receiving unit 122 receives baseband video and audio data transmitted in one direction from the source device by communication conforming to HDMI via the HDMI terminal 121. Details of the HDMI receiving unit 122 will be described later.

The sink-side transmitting/receiving circuit 123 interfaces an Ethernet signal transmitted by using the HEAC+ line and HEAC- line constituting the HDMI cable 130 between the Ethernet transmitting/receiving circuit 124 and the HDMI cable 130. The sink-side transmitting/receiving circuit 123 also interfaces an SPDIF signal transmitted by using the HEAC+ line and HEAC- line constituting the HDMI cable 130 between the SPDIF transmitting circuit 125 and the HDMI cable 130. Details of the sink-side transmitting/receiving circuit 123 will be described later.

The SPDIF transmitting circuit 125 is a circuit to transmit an SPDIF signal. The SPDIF transmitting circuit 125 includes a transmitting unit conforming to the SPDIF standard. The Ethernet transmitting/receiving circuit 124 is, like the Ethernet transmitting/receiving circuit 114 of the source device 110, a circuit to transmit/receive an Ethernet signal and performs bi-directional communication conforming to, for example, the Internet protocol (IP).

The plug connection communication circuit 127 transmits to the source device 110 a message indicating that a sink device is connected by biasing a terminal connected to the HPD line of the HDMI cable 130 to a predetermined voltage.

The sink device 120 also includes a tuner unit 160, a buffer unit 161, a decoding unit 162, and an image display unit 163. The tuner unit 160 receives broadcast wave content via the antenna 140 of the sink device 120 to demodulate the received broadcast wave content. The buffer unit 161 temporarily stores a stream such as MPEG-TS demodulated by the tuner unit 160.

The decoding unit 162 reads a stream stored in the buffer unit 161 to decode the read stream. The decoding unit 162 bases decoding of the stream on, as described later, a clock signal transmitted from the source device 110 or generated by the sink device 120. Then, the decoding unit 162 inputs audio data of the decoded stream into the SPDIF transmitting circuit 125 for transmission, as described later, to the side of the source device 110. The decoding unit 162 also inputs video data of the decoded stream into the image display unit 163. The image display unit 163 displays the input video data.

The source device 110 also includes a D/A conversion unit 150 and a sound output unit 151. The D/A conversion unit 150 makes a D/A conversion of digital audio data transmitted from the sink device 120 and input from the SPDIF receiving circuit 115 to generate analog audio data. The D/A conversion unit 150 bases the D/A conversion of digital audio data on, as described later, a clock signal transmitted from the sink device 120 or generated by the source device 110. Then, the D/A conversion unit 150 inputs the generated analog audio data into the sound output unit 151. The sound output unit 151 reproduces the input audio data.

In the present embodiment, the source device 110 such as an audio device normally has a clock generator capable of generating a very high-quality clock signal mounted thereon and thus generates a clock signal for decoding the above stream, normally a clock signal of 27 MHz by the clock generator mounted on the source device 110. A clock signal generated by the clock generator has the same source clock signal as a clock signal used by the source device 110 for reproducing an audio signal, normally a clock signal of 48 kHz and thus, these clock signals are completely synchronized and maintain high quality with a reduced jitter component.

In the present embodiment, the source device 110 transmits a clock signal for decoding the above stream to the sink device 120. Then, the sink device 120 uses the received clock signal as a reference clock signal to decode a stream stored in the buffer unit 161 and transmits audio data of the decoded stream to the source device 110. Since the received audio data is synchronized with a clock signal generated by the clock generator mounted on the source device 110, the source device 110 can improve reproduction quality of audio data by using the clock signal generated by the clock generator mounted on the source device 110 as a reference clock signal for reproducing the audio data.

In the present embodiment, the decoding unit 162 resets storage content of the buffer unit 161 or inserts, for example, the same video and audio data as the video and audio data immediately before based on a result of decoding the above stream. If, for example, the decoding unit 162 detects a period in which broadcast wave content is silent and blacked out as a result of decoding the above stream, the decoding unit 162 resets the stream stored in the buffer unit 161 or inserts silent and blackout video data. Accordingly, the buffer amount of the buffer unit 161 can be controlled.

Next, the operation of the AV system 100 shown in FIG. 2 will be described. In the AV system 100 according to the present embodiment, video and audio data to be transmitted from the source device 110 to the sink device 120 is transmitted to the sink device 120 by communication conforming to HDMI from the HDMI transmitting unit 112 of the sink device 110 via the HDMI cable 130. Also, video and audio data transmitted from the source device 110 via the HDMI cable 130 by communication conforming to HDMI is received by the HDMI receiving unit 122 of the sink device 120. The sink device 120 can, for example, make a display and output sound based on the video and audio data acquired as described above.

Bi-directional communication conforming to the Internet protocol (IP), that is, an Ethernet signal is transmitted/received between the Ethernet transmitting/receiving circuit 114 of the source device 110 and the Ethernet transmitting/receiving circuit 124 of the sink device 120 via the HDMI cable 130.

Moreover, an SPDIF signal is transmitted/received between the SPDIF receiving circuit 115 of the source device 110 and the SPDIF transmitting circuit 125 of the sink device 120 via the HDMI cable 130. Data such as audio data is processed by the SPDIF transmitting circuit 125 and transmitted as an SPDIF signal. On the other hand, data extraction processing, decode processing or the like is performed on the received SPDIF signal by the SPDIF receiving circuit 115 to acquire data such as audio data.

### [Configuration example of the HDMI transmitting unit, HDMI receiving unit and the like]

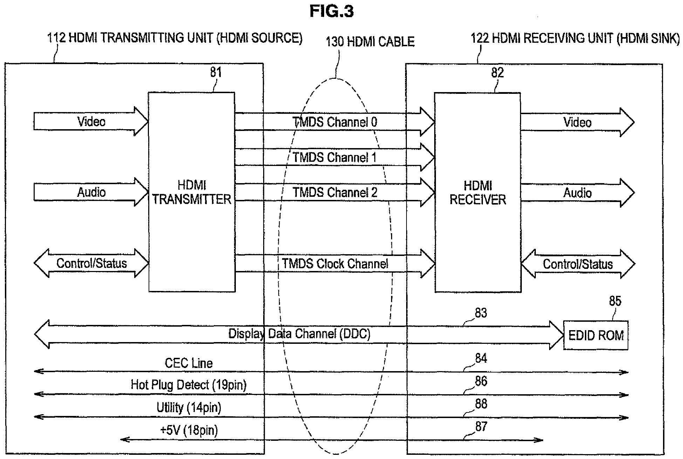

Next, details of the HDMI transmitting unit 112 and the HDMI receiving unit 122 will be described. FIG. 3 shows a configuration example of the HDMI transmitting unit 112 of the sink device 110 and the HDMI receiving unit 122 of the sink device 120.

The HDMI transmitting unit 112 transmits a differential signal corresponding to pixel data of an image for one non-compressed screen to the HDMI receiving unit 122 in one direction on a plurality of channels in a valid image period (hereinafter, referred to also as an active video period when appropriate), which is a period excluding a horizontal retrace line period and a vertical retrace line period from a period between one vertical synchronizing signal and the next vertical synchronizing signal, and also transmits a differential signal corresponding to at least audio data (audio signal) accompanying image data (video signal), control data, and other auxiliary data to the HDMI receiving unit 122 in one direction on the plurality of channels in the horizontal retrace line period or the vertical retrace line period.

That is, the HDMI transmitting unit 112 includes an HDMI transmitter 81. The HDMI transmitter 81, for example, converts pixel data of a non-compressed image into a corresponding differential signal and serially transmits the differential signal to the HDMI receiving unit 122 connected via the HDMI cable 130 in one direction on a plurality of channels of three TMDS (Transition Minimized Differential Signaling) channels #0, #1, and #2.

The HDMI transmitter 81 also converts audio data accompanying the non-compressed image and further necessary control data and other auxiliary data into a corresponding differential signal and serially transmits the differential signal to the HDMI receiving unit 122 connected via the HDMI cable 130 in one direction on the plurality of channels of three TMDS channels #0, #1, and #2.

Further, the HDMI transmitter 81 transmits a pixel clock synchronized with pixel data transmitted on the three TMDS channels #0, #1, and #2 to the HDMI receiving unit 122 connected via the HDMI cable 130 on a TMDS clock channel. On one TMDS channel #i (i = 0, 1, 2), 10-bit pixel data is transmitted in one clock of the pixel clock.

The HDMI receiving unit 122 receives a differential signal corresponding to pixel data transmitted in one direction from the HDMI transmitting unit on a plurality of channels in an active video period and also receives the differential signal corresponding to audio data and control data transmitted in one direction from the HDMI transmitting unit 112 on the plurality of channels in a horizontal retrace line period or vertical retrace line period.

That is, the HDMI receiving unit 122 includes an HDMI receiver 82. The HDMI receiver 82 receives a differential signal corresponding to pixel data transmitted in one direction from the HDMI transmitting unit 112 on the TMDS channels #0, #1, and #2 connected via the HDMI cable 130 and a differential signal corresponding to audio data or control data in synchronization with a pixel clock similarly transmitted on the TMDS clock channel from the HDMI transmitting unit 112.

Transmission channels of an HDMI system having the HDMI transmitting unit 112 and the HDMI receiving unit 122 includes, in addition to the three TMDS channels #0, #1, and #2 as transmission channels that serially transmit pixel data and audio data in one direction from the HDMI transmitting unit 112 to the HDMI receiving unit 122 in synchronization with a pixel clock and the TMDS clock channel as a transmission channel that transmits a pixel clock, transmission channels called DDC (Display Data Channel) 83 and a CEC (Consumer Electronics Control) line 84.

The DDC 83 includes two signal lines (not shown) contained in the HDMI cable 130 and is used to read E-EDID (Enhanced Extended Display Identification Data) from the HDMI receiving unit 122 connected via the HDMI cable 130.

That is, the HDMI receiving unit 122 includes, in addition to the HDMI receiver 82, an EDID ROM (Read Only Memory) 85 that stores E-EDID, which is performance information about performance (configuration/capability) of the HDMI receiving unit 122. The HDMI transmitting unit 112 reads E-EDID of the HDMI receiving unit 122 via the DDC 83 from the HDMI receiving unit 122 connected via the HDMI cable 130 and based on the E-EDID, recognizes, for example, formats (profile) of image supported by an electronic device holding the HDMI receiving unit 122, for example, RGB, YCbCr 4:4:4, and YCbCr 4:2:2.

The CEC line 84 includes one signal line (not shown) contained in the HDMI cable 130 and is used to perform bi-directional communication of control data between the HDMI transmitting unit 112 and the HDMI receiving unit 122.

The HDMI cable 130 includes an HPD line 86 connected to a pin called HPD (Hot Plug Detect). The source device 110 can detect connection of the sink device 120 by using the HPD line 86. The HDMI cable 130 also includes a power line 87 used to supply power from the source device to the sink device. Further, the HDMI cable 130 includes a utility line 88.

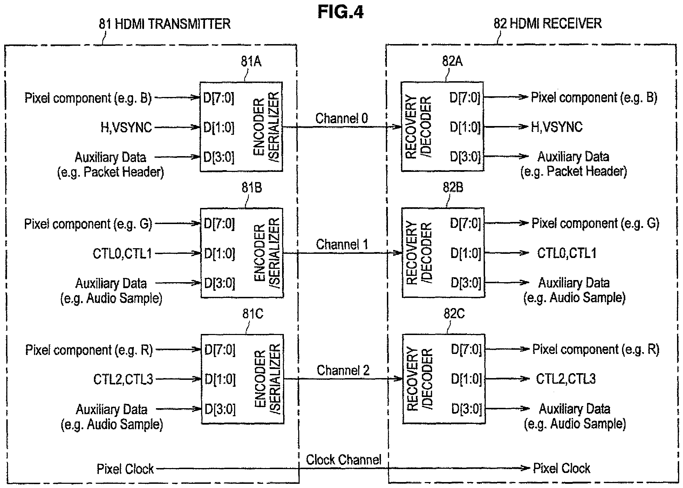

FIG. 4 shows a configuration example of the HDMI transmitter 81 and the HDMI receiver 82 in FIG. 3.

The HDMI transmitter 81 includes three encoders/serializers 81A, 81B, and 81C corresponding to the three TMDS channels #0, #1, and #2. Each of the encoders/serializers 81A, 81B, and 81C encodes image data, auxiliary data, and control data supplied thereto to convert parallel data into serial data and transmits the serial data as a differential signal. If image data contains, for example, three components of R (red), G (green), and B (blue), the B component is supplied to the encoder/serializer 81A, the G component to the encoder/serializer 81B, and the R component to the encoder/serializer 81C.

The auxiliary data includes, for example, audio data and control packets, and control packets are supplied to, for example, the encoder/serializer 81A and audio data to the encoders/serializers 81B and 81C.

Further, the control data includes a 1-bit vertical synchronizing signal (VSYNC), a 1-bit horizontal synchronizing signal (HSYNC), and 1-bit control bits CTL0, CTL1, CTL2, and CTL3. The vertical synchronizing signal and the horizontal synchronizing signal are supplied to the encoder/serializer 81A. The control bits CTL0 and CTL1 are supplied to the encoder/serializer 81B and the control bits CTL2 and CTL3 to the encoder/serializer 81C.

The encoder/serializer 81A transmits the B component of image data, the vertical synchronizing signal and horizontal synchronizing signal, and auxiliary data supplied thereto in a time division manner. That is, the encoder/serializer 81A converts the B component of image data supplied thereto into parallel data in units of 8 bits, which is a fixed number of bits. Further, the encoder/serializer 81A encodes and converts the parallel data into serial data, which is transmitted on the TMDS channel #0.

The encoder/serializer 81A also encodes and converts the 2-bit parallel data of the vertical synchronizing signal and horizontal synchronizing signal supplied thereto into serial data, which is transmitted on the TMDS channel #0. Further, the encoder/serializer 81A converts auxiliary data supplied thereto into parallel data in units of 4 bits. Then, the encoder/serializer 81A encodes and converts the parallel data into serial data, which is transmitted on the TMDS channel #0.

The encoder/serializer 81B transmits the G component of image data, the control bits CTL0 and CTL1, and auxiliary data supplied thereto in a time division manner. That is, the encoder/serializer 81B converts the G component of image data supplied thereto into parallel data in units of 8 bits, which is a fixed number of bits. Further, the encoder/serializer 81B encodes and converts the parallel data into serial data, which is transmitted on the TMDS channel #1.

The encoder/serializer 81B also encodes and converts the 2-bit parallel data of the control bits CTL0 and CTL1 supplied thereto into serial data, which is transmitted on the TMDS channel #1. Further, the encoder/serializer 81B converts auxiliary data supplied thereto into parallel data in units of 4 bits. Then, the encoder/serializer 81B encodes and converts the parallel data into serial data, which is transmitted on the TMDS channel #1.

The encoder/serializer 81C transmits the R component of image data, the control bits CTL2 and CTL3, and auxiliary data supplied thereto in a time division manner. That is, the encoder/serializer 81C converts the R component of image data supplied thereto into parallel data in units of 8 bits, which is a fixed number of bits. Further, the encoder/serializer 81C encodes and converts the parallel data into serial data, which is transmitted on the TMDS channel #2.

The encoder/serializer 81C also encodes and converts the 2-bit parallel data of the control bits CTL2 and CTL3 supplied thereto into serial data, which is transmitted on the TMDS channel #2, Further, the encoder/serializer 81C converts auxiliary data supplied thereto into parallel data in units of 4 bits. Then, the encoder/serializer 81C encodes and converts the parallel data into serial data, which is transmitted on the TMDS channel #2.

The HDMI receiver 82 includes three recovery/decoders 82A, 82B, and 82C corresponding to the three TMDS channels #0, #1, and #2. Each of the recovery/decoders 82A, 82B, and 82C receives image data, auxiliary data, and control data as a differential signal on the TMDS channels #0, #1, and #2, respectively. Further, each of the recovery/decoders 82A, 82B, and 82C converts image data, auxiliary data, and control data from serial data into parallel data and further decodes the data for output.

That is, the recovery/decoder 82A receives the B component of image data, the vertical synchronizing signal and horizontal synchronizing signal, and auxiliary data transmitted as a differential signal on the TMDS channel #0. Then, the recovery/decoder 82A converts the B component of image data, the vertical synchronizing signal and horizontal synchronizing signal, and auxiliary data from serial data into parallel data and decodes the data for output.

The recovery/decoder 82B receives the G component of image data, the control bits CTL0 and CTL1, and auxiliary data transmitted as a differential signal on the TMDS channel #1. Then, the recovery/decoder 82B converts the G component of image data, the control bits CTL0 and CTL1, and auxiliary data from serial data into parallel data and decodes the data for output.

The recovery/decoder 82C receives the R component of image data, the control bits CTL2 and CTL3, and auxiliary data transmitted as a differential signal on the TMDS channel #2. Then, the recovery/decoder 82C converts the R component of image data, the control bits CTL2 and CTL3, and auxiliary data from serial data into parallel data and decodes the data for output.

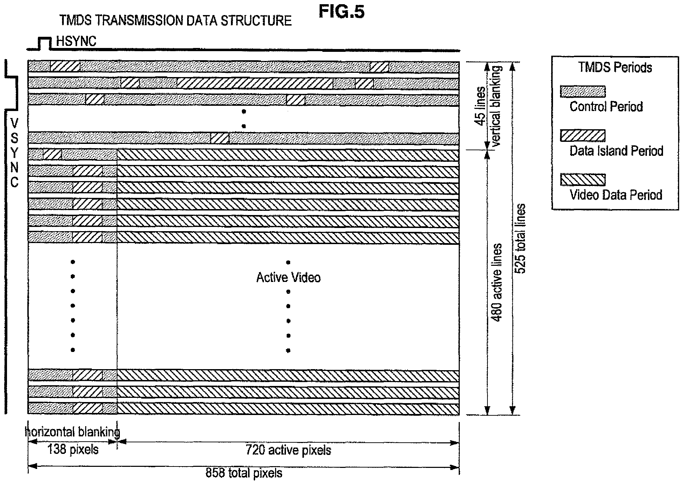

FIG. 5 shows an example of a transmission period in which various kinds of transmission data are transmitted on three TMDS channels #0, #1, and #2 of HDMI. FIG. 5 shows an interval of various kinds of transmission data when a progressive image of 720 x 480 pixels is transmitted on the TMDS channels #0, #1, and #2.

In a video field in which transmission data is transmitted on three TMDS channels #0, #1, and #2 of HDMI, three types of period of a video data period, data island period, and control period are present according to the type of transmission data.

The video field period is a period between an active edge of some vertical synchronizing signal and the next active edge of the vertical synchronizing signal and can be divided into a horizontal blanking period, vertical blanking period, and active video period, which is a period obtained by removing the horizontal blanking period and vertical blanking period from the video field period.

A video data period is allocated to an active video period. In the video data period, data of active pixels for 480 lines x 720 pixels constituting image data for one non-compressed screen is transmitted.

A data island period and a control period are allocated to a horizontal blanking period or a vertical blanking period. In the data island period and the control period, auxiliary data is transmitted.

That is, the data island period is allocated to a portion of the horizontal blanking period or the vertical blanking period. In the data island period, data unrelated to control of auxiliary data, for example, packets and the like of audio data are transmitted.

The control period is allocated to another portion of the horizontal blanking period or the vertical blanking period. In the control period, data related to control of auxiliary data, for example, the vertical synchronizing signal and horizontal synchronizing signal, control packets and the like are transmitted.

In the current HDMI, the frequency of a pixel clock transmitted on the TMDS clock channel is, for example, 165 MHz and in this case, the transmission rate in the data island period is about 500 Mbps.

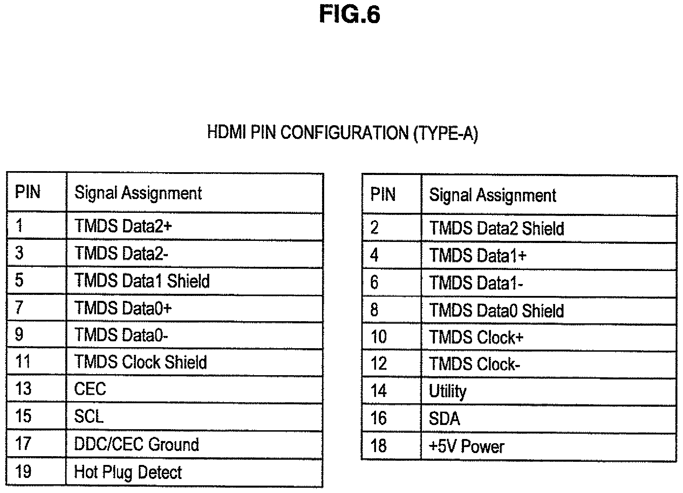

FIG. 6 shows a pin configuration of an HDMI connector. The pin configuration is an example of type-A. Two lines of a differential line on which differential signals of the TMDS channel #i, TMDS Data #i+ and TMDS Data #i-, are transmitted are connected to pins (pins of pin numbers 1, 4, and 7) to which TMDS Data #i+ is allocated and pins (pins of pin numbers 3, 6, and 9) to which TMDS Data #i- is allocated.

The CEC line 84 on which a CEC signal, which is control data, is transmitted is connected to a pin whose pin number is 13 and a pin whose pin number is 14 is connected to a Utility line. A line on which an SDA (Serial Data) signal such as E-EDID is transmitted is connected to a pin whose pin number is 16 and a line on which an SCL (Serial Clock) signal, which is a clock signal used for synchronization when an SDA signal is transmitted/received, is transmitted is connected to a pin whose pin number is 15. The DDC 83 includes the line on which an SDA signal is transmitted and the line on which an SCL signal is transmitted.

The above-described HPD line 86 used by a source device to detect connection of a sink device is connected to a pin whose pin number is 19. The above-described power line 87 to supply power is connected to a pin whose pin number is 18.

### [Overview of the SPDIF standard]

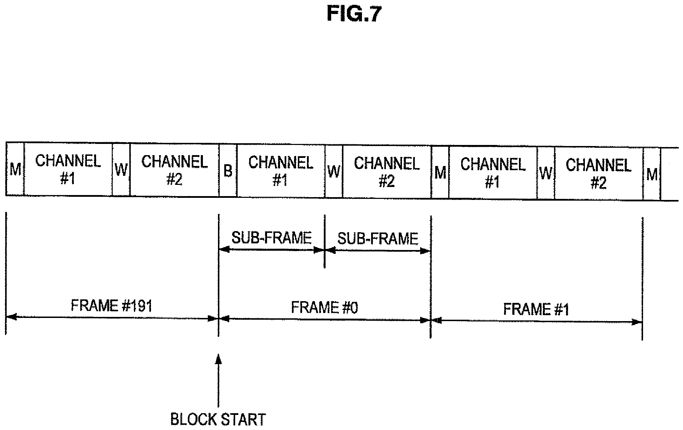

Next, an overview of the SPDIF standard will be provided. FIG. 7 is a diagram showing the frame configuration in the SPDIF standard. In the SPDIF standard, each frame includes two sub-frames. For two-channel stereo sound, a left channel signal is contained in the first sub-frame and a right channel signal in the second sub-frame.

A preamble is provided, as described later, at the head of a sub-frame and "M" is attached to the left channel signal as a preamble and "W" is attached to the right channel signal as a preamble. For every 192 frames, "B" indicating the start of a block is attached to the head preamble. That is, one block includes 192 frames. The block is the unit constituting channel status described later.

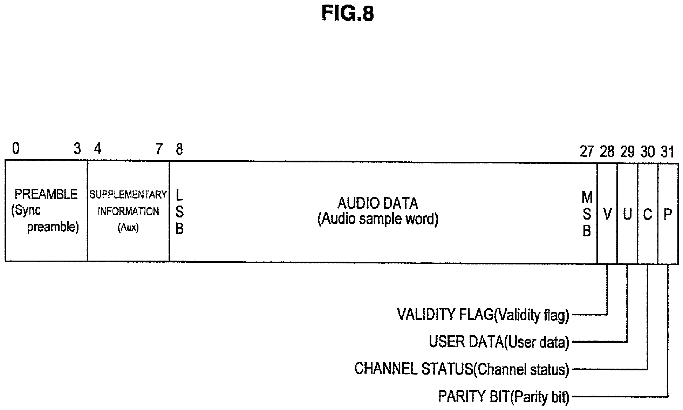

FIG. 8 is a diagram showing a sub-frame configuration in the SPDIF standard. The sub-frame includes a total of 32 time slots from the 0th to the 31st. The 0th to the 3rd time slots indicate a preamble (Sync preamble). The preamble indicates as described above, "M", "W", or "B" to show the distinction of the left/right channel or the start position of a block.

The 4th to the 27th time slots are main data fields and the whole time slots represent audio data if a 24-bit code range is adopted. If a 20-bit code range is adopted, the 8th to the 27th time slots represent audio data (audio sample words). In the latter case, the 4th to the 7th time slots can be used for supplementary information (auxiliary sample bits).

The 28th time slot is a validity flag of the main data field. The 29th time slot represents one bit of user data. A sequence of user data can be constructed by accumulating the 29th time slot across each frame. A message of the user data is formed in units of 8-bit information units (IU) and one message contains three to 129 information units.

Between information units, 0 to eight bits of "0" can be present between information units. The head of an information unit is identified by the start bit "1". The first seven information units in a message are reserved and the user can set any information to the eighth and subsequent information units. Messages are separated by 8-bit "0" or more.

The 30th time slot represents one bit of channel status. A sequence of channel status can be constructed by accumulating the 30th time slot for each block across each frame. The head position of a block is indicated by, as described above, the preamble (the 0th to the 3rd time slots).

The 31 st time slot is a parity bit. The parity bit is set so that the numbers of "0" and "1" contained in the 4th to the 31 st time slots become even.

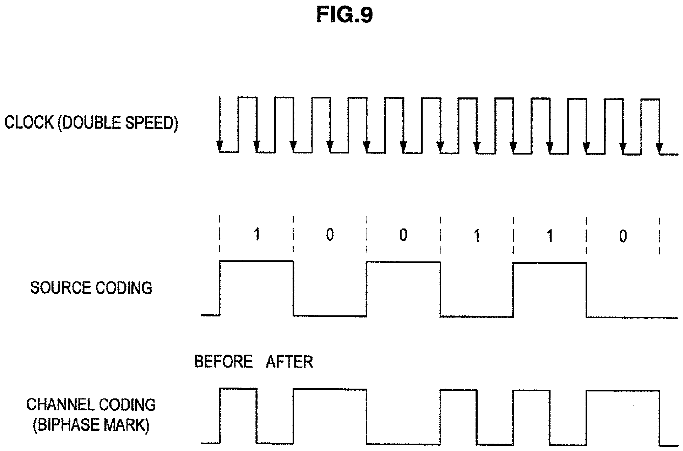

FIG. 9 is a diagram showing a signal modulation method in the SPDIF standard. In the SPDIF standard, the 4th to the 31 st time slots excluding the preamble of a sub-frame is biphase-mark-modulated. For the biphase-mark-modulation, a clock whose clock speed is double that of an original signal (source coding) is used. If the clock cycle of the original signal is divided into the former and the latter, output of the biphase-mark-modulation is inevitably inverted at an edge of the former clock cycle. Moreover, output of the biphase-mark-modulation is inverted at an edge of the latter clock cycle if the original signal indicates "1" and is not inverted if the original signal indicates "0". Accordingly, a clock component in the original signal can be extracted from the biphase-mark-modulated signal.

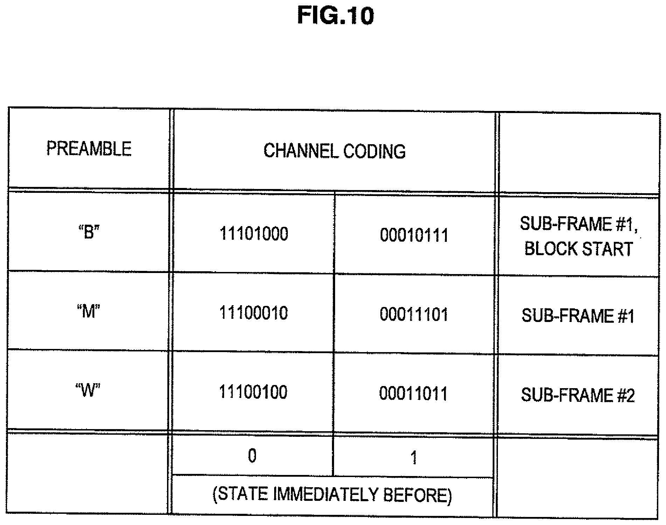

FIG. 10 is a diagram showing channel coding of a preamble in the SPDIF standard. The 4th to the 31st time slots of a sub-frame are, as described above, biphase-mark-modulated. On the other hand, the preamble of the 0th to the 3rd time slots is, instead of being normally biphase-mark-modulated, handled as a bit pattern synchronized with a double-speed clock. That is, 8-bit patterns as shown in FIG. 10 are obtained by allocating two bits to each time slot of the 0th to the 3rd time slots.

If the state immediately before is "0", "11101000" is allocated to the preamble "B", "11100010" to "M", and "11100100" to "W". On the other hand, if the state immediately before is "1", "00010111" is allocated to the preamble "B", "00011101" to "M", and "00011011" to "W".

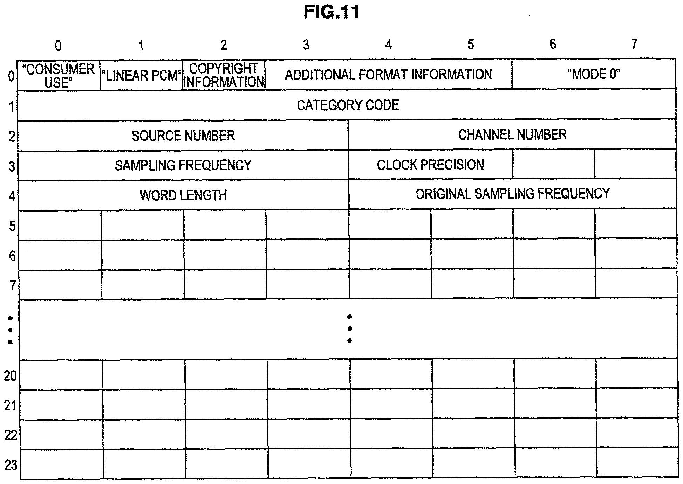

FIG. 11 is a diagram showing the format of channel status in the SPDIF standard. The channel status is obtained by accumulating the 30th time slot in sub-frames for each block and holds information about audio channels transmitted by the same sub-frame. In this diagram, content of the channel status is arranged in bytes in the vertical direction and the bit configuration in each byte is shown in the horizontal direction. Here, a consumer use format is assumed for the description that follows.

In the 0th byte, the 0th bit is a bit indicating that the channel status is intended for consumer use. The 1 st bit is a bit indicating whether or not a sample of linear PCM. The 2nd bit is a bit indicating whether or not software protected by copyright. The 3rd to the 5th bits are a field containing, for example, presence/absence of pre-emphasis as additional format information. The 6th and 7th bits are a field indicating a mode.

The 1 st byte is a field indicating a category code. The category code indicates the type of apparatus generating an audio signal. The category code is arranged from the 8th to the 15th bits when counted from the head of the channel status.

In the 2nd byte, the 0th to the 3rd bits are a field indicating the source number. The source number is a number to identify the source and shows the range from "1" to "15". The 4th to the 7th bits are a field indicating the channel number. The channel number is a number to identify the right channel or left channel.

In the 3rd byte, the 0th to the 3rd bits are a field indicating the sampling frequency. For example, "0000" indicates 44.1 KHz as the sampling frequency. The 4th and the 5th bits are a field indicating clock precision. The clock precision shows the level of precision on a scale from 1 to 3.

In the 4th byte, the 0th to the 3rd bits are a field indicating the word length. "0" of the 0th bit means the maximum sample length of 20 bits and "1" means the maximum sample length of 24 bits. Then, in the 1st to the 3rd bits that follow, the concrete number of bits can be identified. The 4th and the 5th bits are a field indicating the original sampling frequency.

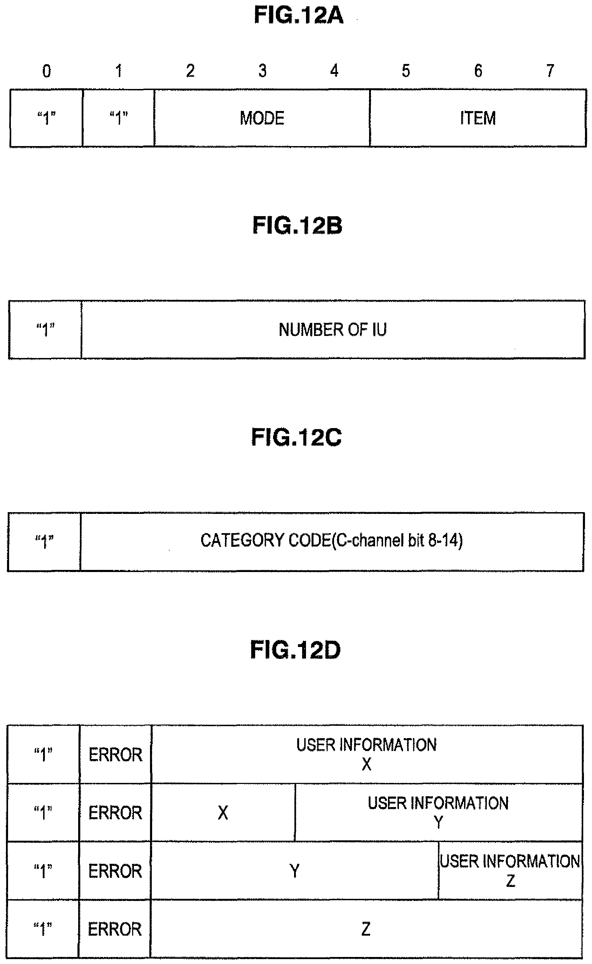

FIG 12 is a diagram showing the format of user data in the SPDIF standard. The user data is obtained by accumulating the 29th time slot in sub-frames for each block. As described above, a message of user data is constituted in units of 8-bit information units (IU) and one message contains three to 129 information units. Moreover, messages are separated by 8-bit "0" or more and the head of an information unit is recognized by the start bit "1".

As shown in FIG. 12A, the head information unit contains a mode and an item. The mode is a field indicating a message class and indicates, for example, preset information. The item is a field to further define the message type. As shown in FIG. 12B, the second information unit contains the number of information units. With seven bits excluding the head bit, the number of information units can be shown in the range of "1" to "127".

As shown in FIG. 12C, the third information unit contains a category code. The category code is a category code for the generation source of audio data indicated by the 1st byte of the channel status in FIG. 11. The head bit of an information unit is the start bit in user data and thus, seven bits include valid data. These seven bits correspond to the 8th to the 14th bits in the channel status. The 15th bit, an L bit, is a bit indicating commercial pre-record software and is not contained in a message of the user data.

As shown in FIG. 12D, the 4th to the 7th information units contain three pieces of user information X, Y, and Z. One byte (eight bits) is allocated to each of three pieces of user information.

### [Configuration example of the source-side transmitting/receiving circuit, sink-side transmitting/receiving circuit and the like]

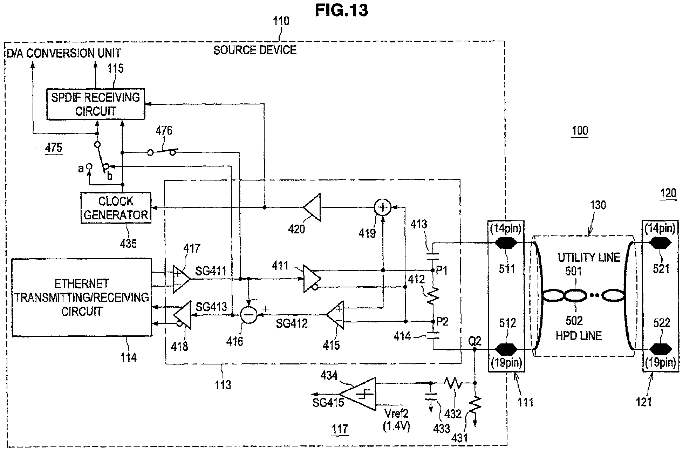

FIG. 13 shows a configuration example of the source-side transmitting/receiving circuit 113, the plug connection detection circuit 117 and the like of the source device 110. The Ethernet transmitting/receiving circuit 114 performs LAN (Local Area Network) communication, that is, transmits/receives an Ethernet signal using a transmission path composed of a pair of lines among a plurality of lines constituting the HDMI cable 130. In the present embodiment, the pair of lines are an HEAC+ line corresponding to the Utility pin (14th pin) and an HEAC- line corresponding to the HPD pin (19th pin).

The SPDIF receiving circuit 115 receives an SPDIF signal using the transmission path composed of the pair of lines. If a clock signal synchronized with the SPDIF signal comes transmitted using a transmission path composed of a pair of lines, the SPDIF receiving circuit 115 can use the clock signal. Further, the SPDIF receiving circuit 115 can transmit a clock signal generated by a clock generator 435 and synchronized with the SPDIF signal using the transmission path composed of the pair of lines. The SPDIF receiving circuit 115 can also transmit a received SPDIF signal to the D/A conversion unit 150.

The source device 110 includes a LAN signal transmitting circuit 411, a terminator 412, AC coupling capacitors 413 and 414, a LAN signal receiving circuit 415, a subtractor 416, amplifiers 417 and 418, an adder 419, and an amplifier 420. These components constitute the source-side transmitting/receiving circuit 113.

The source device 110 also includes a pull-down resistor 431, a resistor 432, a capacitor 433, and a comparator 434 constituting the plug connection detection circuit 117. The resistor 432 and the capacitor 433 constitute a low-pass filter. The source device 110 further includes the clock generator 435, a changeover switch 475, and a connection switch 476.

A mutual connection point P1 of the AC coupling capacitor 413 and the terminator 412 is connected to an output side of an adder 471 and also to a positive input side of the LAN signal receiving circuit 415. A mutual connection point P2 of the AC coupling capacitor 414 and the terminator 412 is connected to the output side of an adder 472 and also to a negative input side of the LAN signal receiving circuit 415.

A transmission signal (transmission data) SG411 is supplied to the input side of the LAN signal transmitting circuit 411 from the Ethernet transmitting/receiving circuit 114 via the amplifier 417 of differential input.

An output signal SG412 of the LAN signal receiving circuit 415 is supplied to a positive terminal of the subtractor 416 and the transmission signal (transmission data) SG411 is supplied to a negative terminal of the subtractor 416. In the subtractor 416, the transmission signal SG411 is subtracted from the output signal SG412 of the LAN signal receiving circuit 415 to obtain a reception signal SG413.

The reception signal SG413 is supplied to the Ethernet transmitting/receiving circuit 114 via the amplifier 418 as differential output and also to a b-side fixed terminal of the changeover switch 475. If a LAN signal (Ethernet signal) comes transmitted as a differential signal via the HEAC+ line and HEAC-line, the reception signal SG413 becomes the LAN signal. If, on the other hand, a clock signal comes transmitted as a differential signal via the HEAC+ line and HEAC- line, the reception signal SG413 becomes the clock signal.

A mutual connection point Q2 of the AC coupling capacitor 414 and the pull-down resistor 431 is connected to a ground wire via a series circuit of the resistor 432 and the capacitor 433. An output signal of the low-pass filter at a mutual connection point of the resistor 432 and the capacitor 433 is input into one input terminal of the comparator 434. The comparator 434 compares the output signal of the low-pass filter with a reference voltage Vref2 (+1.4 V) supplied to the other input terminal. An output signal SG415 of the comparator 434 is supplied to a control unit (CPU) (not shown) of the source device 110.

The mutual connection point P1 of the AC coupling capacitor 413 and the terminator 412 is also connected to one input terminal of the adder 419. The mutual connection point P2 of the AC coupling capacitor 414 and the terminator 412 is connected to the other input terminal of the adder 419.

If an SPDIF signal comes as an in-phase signal transmitted from the sink device 120 via the HEAC+ line and HEAC- line, an output signal of the adder 419 becomes the SPDIF signal. The output signal of the adder 419 is supplied to the SPDIF receiving circuit 115 via the amplifier 420 and also to the clock generator 435.

The clock generator 435 includes a PLL circuit and, if an SPDIF signal is supplied, generates a clock signal synchronized with the SPDIF signal by using the SPDIF signal as a reference signal. The clock signal generated by the clock generator 435 is supplied to an a-side fixed terminal of the changeover switch 475. Then, a clock signal obtained by a movable terminal of the changeover switch 475 is supplied as an operating clock of the SPDIF receiving circuit 115 and the D/A conversion unit 150.

Switching of the changeover switch 475 is controlled by the control unit (CPU) (not shown). If a clock signal transmitted from the sink device 120 is used as an operating clock of the receiving unit and the D/A conversion unit 150, the changeover switch 475 is connected to the b side. If a clock signal generated by the clock generator 435 is used as an operating clock of the SPDIF receiving circuit 115 and the D/A conversion unit 150, the changeover switch 475 is connected to the a side.

The clock signal output from the clock generator 435 is supplied to the input side of the LAN signal transmitting circuit 411 via the connection switch 476. The connection of the connection switch 476 is controlled by the control unit (CPU) (not shown). The connection switch 476 is put into a connected state when a clock signal is to be transmitted to the sink device 120 and is put into a non-connected state when a clock signal is not to be transmitted to the sink device 120.

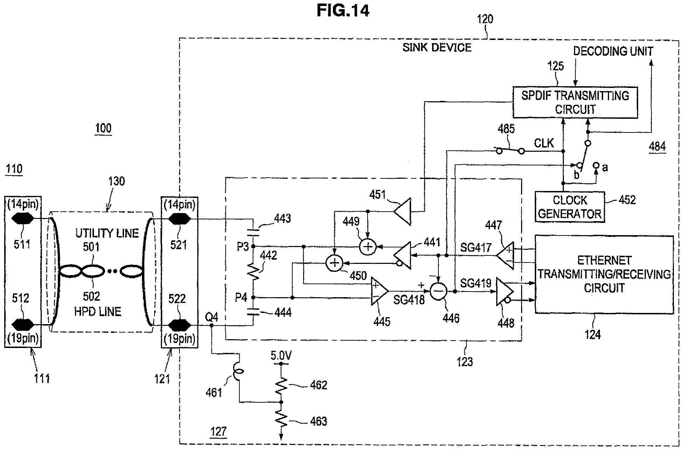

FIG. 14 shows a configuration example of the sink-side transmitting/receiving circuit 123, the plug connection communication circuit 127 and the like of the sink device 120. The Ethernet transmitting/receiving circuit 124 performs LAN (Local Area Network) communication, that is, transmits/receives an Ethernet signal using a transmission path composed of a pair of lines among the plurality of lines constituting the HDMI cable 130. In the present embodiment, the pair of lines are the HEAC+ line corresponding to the Utility pin (14th pin) and the HEAC- line corresponding to the HPD pin (19th pin).

The SPDIF transmitting circuit 125 transmits an SPDIF signal using the transmission path composed of the pair of lines. Then, the SPDIF transmitting circuit 125 can transmit a clock signal generated by a clock generator 452 and synchronized with the SPDIF signal using the transmission path composed of the pair of lines. The SPDIF transmitting circuit 125 can also transmit audio data received from the decoding unit 162 to the source device 110 as an SPDIF signal.

The sink device 120 includes a LAN signal transmitting circuit 441, a terminator 442, AC coupling capacitors 443 and 444, a LAN signal receiving circuit 445, a subtractor 446, amplifiers 447 and 448, adders 449 and 450, and an amplifier 451. These components constitute the sink-side transmitting/receiving circuit 123.

The sink device 120 also includes a choke coil 461, a resistor 462, and a resistor 463 constituting the plug connection communication circuit 127. The sink device 120 also includes the clock generator 452, a changeover switch 484, and a connection switch 485.

A series circuit of the resistor 462 and the resistor 463 is connected between a power line (+5.0 V) and a ground wire. Then, a series circuit of the choke coil 461, the AC coupling capacitor 444, the terminator 442, the AC coupling capacitor 443, and a pull-down resistor 454 is connected between a mutual connection point of the resistor 462 and the resistor 463 and the ground wire.

A mutual connection point P3 of the AC coupling capacitor 443 and the terminator 442 is connected to the output side of the adder 449 and also to the positive input side of the LAN signal receiving circuit 445. A mutual connection point P4 of the AC coupling capacitor 444 and the terminator 442 is connected to the output side of the adder 450 and also to the negative input side of the LAN signal receiving circuit 445.

One input side of the adder 449 is connected to the positive output side of the LAN signal transmitting circuit 441 and an SPDIF signal output from the SPDIF transmitting circuit 125 is supplied to the other input side of the adder 449 via the amplifier 451. Also, one input side of the adder 450 is connected to the negative output side of the LAN signal transmitting circuit 441 and an SPDIF signal output from the SPDIF transmitting circuit 125 is supplied to the other input side of the adder 450 via the amplifier 451.

A transmission signal (transmission data) SG417 is supplied to the input side of the LAN signal transmitting circuit 441 from the Ethernet transmitting/receiving circuit 124 via the amplifier 477 of differential input. An output signal SG418 of the LAN signal receiving circuit 445 is supplied to the positive terminal of the subtractor 446 and the transmission signal (transmission data) SG417 is supplied to the negative terminal of the subtractor 446. In the subtractor 446, the transmission signal SG417 is subtracted from the output signal SG418 of the LAN signal receiving circuit 445 to obtain a reception signal (reception data) SG419. The reception signal SG419 obtained by the subtractor 446 is supplied to the Ethernet transmitting/receiving circuit 124 via the amplifier 448 as differential output and also to the b-side fixed terminal of the changeover switch 484. If a LAN signal (Ethernet signal) comes transmitted as a differential signal via the HEAC+ line and HEAC- line, the reception signal SG419 becomes the LAN signal. If, on the other hand, a clock signal comes transmitted as a differential signal via the HEAC+ line and HEAC- line, the reception signal SG419 becomes the clock signal.

The clock generator 452 includes a PLL circuit and a clock signal generated by the clock generator 452 is supplied to the a-side fixed terminal of the changeover switch 484. Then, a clock signal obtained by a movable terminal of the changeover switch 484 is supplied as an operating clock of the SPDIF transmitting circuit 125 and the decoding unit 162.

Switching of the changeover switch 484 is controlled by the control unit (CPU) (not shown). If a clock signal transmitted from the source device 110 is used as an operating clock of the decoding unit 162, the changeover switch 484 is connected to the b side. If, on the other hand, a clock signal generated by the clock generator 452 is used as an operating clock of the decoding unit 162, the changeover switch 484 is connected to the a side.

The clock signal output from the clock generator 452 is supplied to the SPDIF transmitting circuit 125 as an operating clock of the transmitting unit. Thus, an SPDIF signal output from the SPDIF transmitting circuit 125 is synchronized with a clock signal output from the clock generator 452. Moreover, the clock signal output from the clock generator 452 is supplied to the input side of the LAN signal transmitting circuit 441 via the connection switch 485. The connection of the connection switch 485 is controlled by the control unit (CPU) (not shown). The connection switch 485 is put into a connected state when a clock signal is to be transmitted to the source device 110 and the connection switch 485 is put into a non-connected state when a clock signal is not to be transmitted to the source device 110.

As shown in FIGS. 13 and 14, an HEAC+ line 501 and an HEAC- line 502 contained in the HDMI cable 130 constitute a twisted pair. A source-side end 511 of the HEAC+ line 501 is connected to the 14th pin of the HDMI terminal 111 of the source device 110 and a sink-side end 521 of the HEAC+ line 501 is connected to the 14th pin of the HDMI terminal 121 of the sink device 120. A source-side end 512 of the HEAC- line 502 is connected to the 19th pin of the HDMI terminal 111 of the source device 110 and a sink-side end 522 of the HEAC- line 502 is connected to the 19th pin of the HDMI terminal 121 of the sink device 120.

In the source device 110, the mutual connection point Q2 of the above pull-down resistor 431 and the AC coupling capacitor 414 is connected to the 19th pin of the HDMI terminal 111.

In the sink device 120, a mutual connection point Q4 of the above choke coil 461 and the AC coupling capacitor 444 is connected to the 19th pin of the HDMI terminal 121.

### [LAN communication operation]

The operation of LAN communication in the configuration shown in FIGS. 13 and 14 will be described. In the source device 110, the transmission signal (transmission data) SG411 is supplied from the Ethernet transmitting/receiving circuit 114 to the input side of the LAN signal transmitting circuit 411 via the amplifier 417. A differential signal (positive output signal, negative output signal) corresponding to the transmission signal SG411 is output from the LAN signal transmitting circuit 411. The differential signal is supplied to the connection points P1 and P2 before being transmitted to the sink device 120 through the pair of lines (the HEAC+ line 501, the HEAC- line 502) of the HDMI cable 130.

In the sink device 120, the transmission signal (transmission data) SG417 is supplied from the Ethernet transmitting/receiving circuit 124 to the input side of the LAN signal transmitting circuit 441 via the amplifier 447. A differential signal (positive output signal, negative output signal) corresponding to the transmission signal SG417 is output from the LAN signal transmitting circuit 441. The differential signal is supplied to the connection points P3 and P4 before being transmitted to the source device 110 through the pair of lines (the HEAC+ line 501, the HEAC- line 502) of the HDMI cable 130.

In the source device 110, the input side of the LAN signal receiving circuit 415 is connected to the connection points P1 and P2. Thus, an added signal of a transmission signal corresponding to a differential signal (current signal) output from the LAN signal transmitting circuit 411 and a reception signal corresponding to, as described above, the differential signal transmitted from the sink device 120 is obtained as the output signal SG412 of the LAN signal receiving circuit 415. In the subtractor 416, the transmission signal SG411 is subtracted from the output signal SG412 of the LAN signal receiving circuit 415. Thus, the output signal SG413 of the subtractor 416 corresponds to the transmission signal (transmission data) SG417 of the sink device 120. The output signal SG413 is supplied to the Ethernet transmitting/receiving circuit 114 via the amplifier 418.

In the sink device 120, the input side of the LAN signal receiving circuit 445 is connected to the connection points P3 and P4. Thus, an added signal of a transmission signal corresponding to a differential signal (current signal) output from the LAN signal transmitting circuit 441 and a reception signal corresponding to, as described above, the differential signal transmitted from the source device 110 is obtained as the output signal SG418 of the LAN signal receiving circuit 445. In the subtractor 446, the transmission signal SG417 is subtracted from the output signal SG418 of the LAN signal receiving circuit 445. Thus, the output signal SG419 of the subtractor 446 corresponds to the transmission signal (transmission data) SG411 of the source device 110. The output signal SG419 is supplied to the Ethernet transmitting/receiving circuit 124 via the amplifier 448.

Thus, bi-directional communication of a LAN signal (Ethernet signal) can be performed between the Ethernet transmitting/receiving circuit 114 of the source device 110 and the Ethernet transmitting/receiving circuit 124 of the sink device 120.

### [Transmission operation of an SPDIF signal]

The transmission operation of an SPDIF signal in the configuration shown in FIGS. 13 and 14 will be described. In the sink device 120, an SPDIF signal output from the SPDIF transmitting circuit 125 is supplied to the connection points P3 and P4 via the amplifier 451 and the adders 449 and 450. Accordingly, the SPDIF signal is transmitted to the source device 110 as an in-phase signal through the pair of lines (the HEAC+ line 501, the HEAC-line 502) of the HDMI cable 130.

In the source device 110, the connection points P1 and P2 are each connected to the input side of the adder 419. Thus, an SPDIF signal transmitted from the sink device 120 is obtained as an output signal of the adder 419. The SPDIF signal is supplied to the SPDIF receiving circuit 115 via the amplifier 420.

Thus, an SPDIF signal can be transmitted between the SPDIF receiving circuit 115 of the source device 110 and the SPDIF transmitting circuit 125 of the sink device 120.

### [Clock signal]

In the SPDIF receiving circuit 115 of the source device 110, data extraction processing, decode processing and the like are performed on the received SPDIF signal based on the clock signal corresponding to the SPDIF signal to acquire data such as audio data. In the SPDIF receiving circuit 115, a clock signal generated by the clock generator 435 held by the source device 110 or a clock signal transmitted from the sink device 120 is used as the operating clock of the receiving unit. In the D/A conversion unit 150, a clock signal generated by the clock generator 435 held by the source device 110 or a clock signal transmitted from the sink device 120 is used as the operating clock.

First, a state in which a clock signal generated by the clock generator 435 is used will be described. In this case, the connection switch 485 is put into a non-connected state in the sink device 120 and a clock signal CLK generated by the clock generator 452 is not transmitted to the source device 110. Also in this case, the changeover switch 475 is connected to the a side in the source device 110. Accordingly, the clock signal generated by the clock generator 435 is supplied to the SPDIF receiving circuit 115 as an operating clock and also as an operating clock of the D/A conversion unit 150.

A clock signal generated by the clock generator 435 is generated by the PLL circuit using a received SPDIF signal as a reference signal and is synchronized with the SPDIF signal. Thus, in the receiving unit of the SPDIF receiving circuit 115, data extraction processing, decode processing and the like are performed based on the clock signal CLK synchronized with the SPDIF signal to acquire data such as audio data.

Next, a state in which a clock signal transmitted from the sink device 120 will be described. In the sink device 120, the connection switch 485 is put into a connected state. A clock signal generated by the clock generator 452 is supplied to the input side of the LAN signal transmitting circuit 441. A differential signal (positive output signal, negative output signal) corresponding to the clock signal is output from the LAN signal transmitting circuit 441. The differential signal is supplied to the connection points P3 and P4 and transmitted to the source device 110 through the pair of lines (the HEAC+ line 501, the HEAC- line 502) of the HDMI cable 130.

In the source device 110, the changeover switch 475 is connected to the b side. Also in the source device 110, the input side of the LAN signal receiving circuit 415 is connected to the connection points P1 and P2. Thus, the output signal SG412 of the LAN signal receiving circuit 415 and therefore, the output signal SG413 of the subtractor 416 becomes the clock signal CLK transmitted from the sink device 120. The clock signal CLK is supplied to the SPDIF receiving circuit 115 via the changeover switch 475 as an operating clock and also as an operating clock of the D/A conversion unit 150.

An SPDIF signal supplied to the SPDIF receiving circuit 115 is a signal obtained by the SPDIF transmitting circuit 125 of the sink device 120 using the clock signal CLK generated by the clock generator 452 as an operating clock. Thus, in the source device 110, the clock signal CLK transmitted from the sink device 120 to be supplied to the SPDIF receiving circuit 115 is synchronized with a received SPDIF signal supplied to the SPDIF receiving circuit 115. Thus, in the SPDIF receiving circuit 115, data extraction processing, decode processing and the like are performed based on the clock signal synchronized with the SPDIF signal to acquire data such as audio data.

What is described above focuses on the operating clock of the SPDIF receiving circuit 115 and the D/A conversion unit 150 of the source device 110. Though a detailed description is not described, the same applies to the operating clock of the SPDIF transmitting circuit 125 of the sink device 120 and the decoding unit 162. That is, a clock signal generated by the clock generator 452 held by the sink device 120 or a clock signal transmitted from the source device 110 is used as the operating clock of the transmitting unit and the decoding unit 162.

### [Machine type detection and plug connection detection]

In FIGS. 13 and 14, in addition to the LAN communication described above, the HPD line 502 transmits to the source device 110 a message indicating that the HDMI cable 130 is connected to the sink device 120. That is, when the HDMI cable 130 is connected to the sink device 120, the resistors 462 and 463 and the choke coil 461 inside the sink device 120 bias the HPD line 502 to about 4 V via the 19th pin of the HDMI terminal 121. The source device 110 extracts a DC bias of the HPD line 502 through a low-pass filter composed of the resistor 432 and the capacitor 433 and compares the DC bias with a reference voltage Vref2 (for example, 1.4 V) using the comparator 434.

If the HDMI cable 130 is not connected to the sink device 120, the voltage of the 19th pin of the HDMI terminal 111 of the source device 110 is lower than the reference voltage Vref2 due to the presence of the pull-down resistor 431 and conversely, if the HDMI cable 130 is connected to the sink device 120, the voltage of the 19th pin is higher than the reference voltage Vref2. Thus, the output signal SG415 of the comparator 434 is at a high level when the HDMI cable 130 is not connected to the sink device 120 and otherwise, at a low level. Accordingly, the control unit (CPU) (not shown) of the source device 120 can recognize whether the HDMI cable 130 is connected to the sink device 120 based on the output signal SG415 of the comparator 434.

Further, the pull-down resistor 463 shown in FIG. 14 may be provided inside the HDMI cable 130, instead of inside the sink device 120. In such a case, respective terminals of the resistor 463 are connected, among lines provided inside the HDMI cable 130, to the HPD line 502 and the ground (reference potential).

As described above, the sink device 120 can transmit a clock signal to the source device 110 as a differential signal via a transmission path composed of an HEAC+ line and an HEAC- line. On the other hand, the source device 110 can extract and use a clock signal transmitted as a differential signal from the sink device 120 via the transmission path composed of the HEAC+ line and the HEAC- line.

Thus, whether to have a clock signal transmitted by the sink device 120 to use the clock signal or to use a clock signal generated by the clock generator 435 held by the source device 110 is preset on the side of the source device 110. Details thereof will be described later.

Also as described above, the source device 110 can transmit a clock signal to the sink device 120 as a differential signal via the transmission path composed of the HEAC+ line and the HEAC- line. On the other hand, the sink device 120 can extract and use a clock signal transmitted as a differential signal from the source device 110 via the transmission path composed of the HEAC+ line and the HEAC-line.

Thus, whether to have a clock signal transmitted by the source device 110 to use the clock signal or to use a clock signal generated by the clock generator 452 held by the sink device 120 is preset on the side of the sink device 120. Details thereof will be described later.

A clock signal is transmitted on the transmission path composed of the HEAC+ line and the HEAC- line as a differential signal. As described above, a LAN signal (Ethernet signal) between the source device 110 and the sink device 120 is also transmitted on the transmission path composed of the HEAC+ line and the HEAC- line as a differential signal. Thus, when communication of a LAN signal (Ethernet signal) between the source device 110 and the sink device 120 is performed, a clock signal is not transmitted. Accordingly, communication of a LAN signal (Ethernet signal) will not be affected by a clock signal.

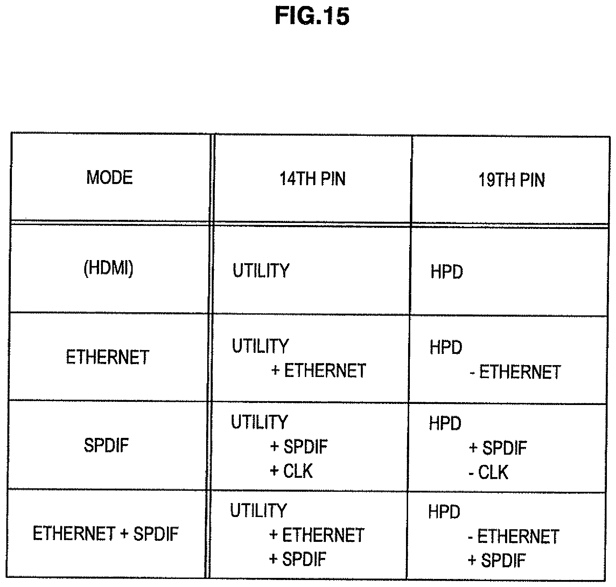

FIG. 15 is a diagram summarizing operations using the Utility line and the HPD line in the above embodiment. The 14th pin corresponds to the Utility line 501 and the 19th to the HPD line 502. When neither Ethernet signal nor SPDIF signal is transmitted, the operation will be based on the conventional HDMI standard. When an Ethernet signal is transmitted, a positive signal of the Ethernet signal is superimposed on the 14th pin and a negative signal of the Ethernet signal is superimposed on the 19th pin.

When an SPDIF signal is transmitted, the positive signal of the Ethernet signal is superimposed on the 14th and 19th pins. In this case, the clock signal CLK synchronized with the SPDIF signal can be transmitted. When the clock signal CLK is transmitted, the positive signal of the clock signal CLK is superimposed on the 14th pin and the negative signal of the clock signal CLK is superimposed on the 19th pin.

Further, when both of an Ethernet signal and an SPDIF signal are transmitted, the positive signal of the Ethernet signal and that of the SPDIF signal are superimposed on the 14th pin and the negative signal of the Ethernet signal and the positive signal of the SPDIF signal are superimposed on the 19th pin. In this case, transmission of the Ethernet signal is affected and thus, it is difficult to transmit the clock signal CLK synchronized with the SPDIF signal.

### [Transmission/reception of function information]

In the AV system 100 described above, the source device 110 and the sink device 120 mutually acquire function information of the other party and selectively transmit a LAN signal (Ethernet signal), an SPDIF signal or the like based on the function information.

Transmission/reception of function information using a CEC line (CEC channel) will be described. Control data can be transmitted on the CEC line in both directions between a source device and a sink device. The above function information is transmitted as, for example, CEC (Consumer Electronics Control) data or CDC (Capability Discovery Channel) data from the source device to the sink device or from the sink device to the source device.

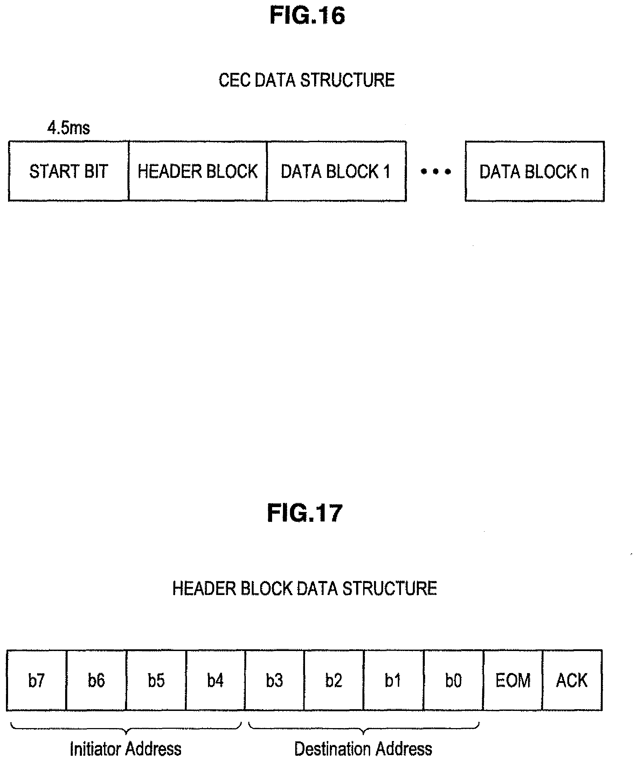

FIG. 16 is a diagram showing the configuration of CEC data transmitted on the CEC line. One block composed of 10-bit data is transmitted on the CEC line in 4.5 ms. The status bit is arranged at the head thereof and subsequently, the header block is arranged and then, any number (n) of data blocks containing data to be actually transmitted are arranged. Function information is contained in the data blocks.

FIG. 17 is a diagram showing a configuration example of the header block. In the header block, a logical address of an initiator and that of a destination are arranged. Each logical address is set according to the type of each device.

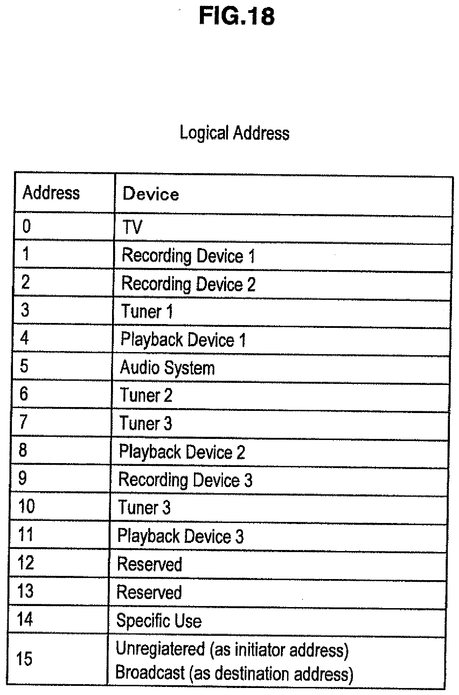

FIG. 18 is a diagram showing logical addresses set according to the type of each device. As shown in FIG. 18, 16 address values from "0" to "15" are set for the type of each device. For the logical address of the initiator and that of the destination constituting the header block in FIG. 17, corresponding address values are arranged in four bits.

Next, CDC data will be described. While CDC has the same physical layer as CEC, a logical layer that is different from that of CEC is defined for CDC. Though not illustrated, the structure of CDC data is the same as that of CEC data shown in FIG. 16. The status bit is arranged at the head thereof and subsequently, the header block is arranged and then, any number (n) of data blocks containing data to be actually transmitted are arranged.

Though not illustrated, the structure of the header block of CDC data is structurally the same as the header block of CEC data shown in FIG. 17. However, "15" is typically is used as the logical address of the initiator and that of the destination regardless of the type of device. That is, the initiator is set as unregistered and the destination as broadcast.

Since "15" is used for both logical addresses of the initiator and the destination arranged in the header block for transmission of CDC data, there is no need to acquire the logical address of each device. A message by CDC data (CDC message) becomes a broadcast message whose initiator is unknown for CEC and it is incomprehensible to know which device transmits the message to which device.

Thus, a message arranged in the data block of a CDC message is made to contain physical addresses of the initiator and the destination without exception to identify the physical connection path. That is, a physical address, instead of a logical address, is used for transmission of a CDC message.

It is difficult for CEC to return a message of <Feature Abort> (Not supported) regarding a broadcast message. Thus, in consideration of this situation, CDC is made to return a message without exception.

### [Transmission/reception processing of a clock signal]

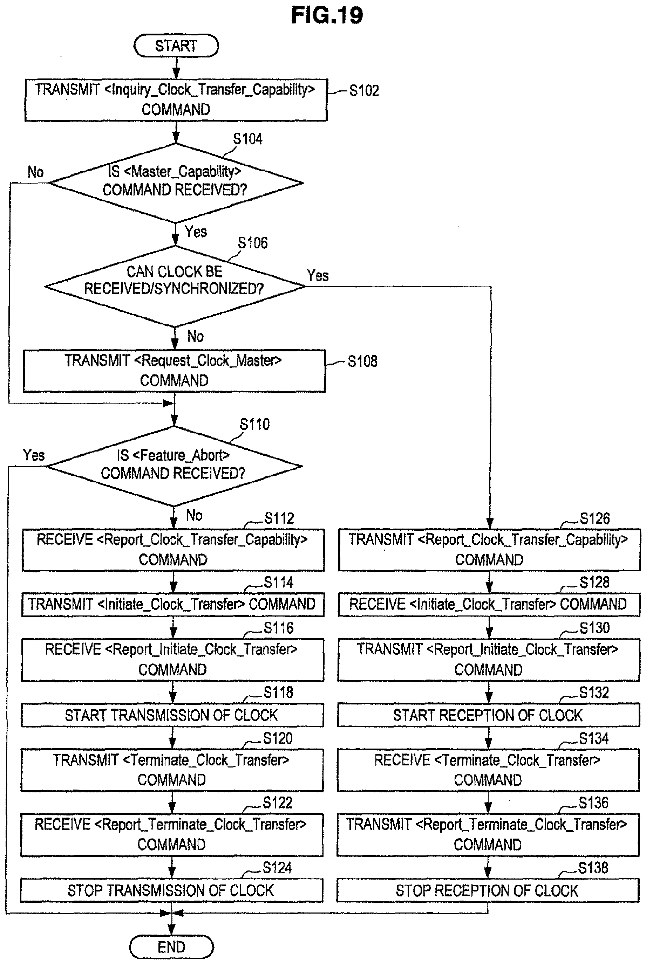

Next, transmission/reception processing of a clock signal performed by the source device 110 in the AV system 100 in FIG. 2 will be described. FIG. 19 is a flow chart of transmission/reception processing of a clock signal performed by the source device 110 in the AV system 100 in FIG. 2.

In FIG. 19, the HDMI transmitting unit 112 of the source device 110 transmits, for example, a <Inquiry_Clock_Transfer Capability> command to the HDMI receiving unit 122 of the sink device 120 via the CEC line 84 to make an inquiry about the transfer capability of a clock signal (step S102).

Next, the HDMI transmitting unit 112 of the source device 110 determines whether, for example, a <Master_Capability> command is received from the HDMI receiving unit 122 of the sink device 120 via the CEC line 84 to determine whether a message indicating that the sink device 120 is ready to become the master side of a clock signal is received (step S104).

If, as a result of the determination in step S104, no message indicating that the sink device 120 is ready to become the master side of a clock signal is received (No in step S104), the processing proceeds to step S110 described later.

If, as a result of the determination in step S104, a message indicating that the sink device 120 is ready to become the master side of a clock signal is received (Yes in step S104), a control unit (not shown) of the source device 110 determines whether the source device 110 is capable of receiving/synchronizing a clock signal (step S106).

If, as a result of the determination in step S106, the source device 110 is incapable of receiving/synchronizing a clock signal (No in step S106), the HDMI transmitting unit 112 of the source device 110 transmits, for example, a <Request_Clock_Master> command to the HDMI receiving unit 122 of the sink device 120 via the CEC line 84 to make a request that the source device 110 should become the master side of a clock signal (step S108).

Next, the HDMI transmitting unit 112 of the source device 110 determines whether, for example, a <Feature_Abort> command is received from the HDMI receiving unit 122 of the sink device 120 via the CEC line 84 to determine whether a message that transfer of a clock signal will stop is received (step S110).

If, as a result of the determination in step S110, a message that transfer of a clock signal will stop is received (Yes in step S110), the present processing is terminated.

If, as a result of the determination in step S110, no message that transfer of a clock signal will stop is received (No in step S110), the HDMI transmitting unit 112 of the source device 110 receives, for example, a <Report_Clock_Transfer_Capability> command from the HDMI receiving unit 122 of the sink device 120 via the CEC line 84 to receive a report on the transfer capability of a clock signal from the sink device 120 (step S112).

Next, the HDMI transmitting unit 112 of the source device 110 transmits, for example, an <Initiate_Clock_Transfer> command to the HDMI receiving unit 122 of the sink device 120 via the CEC line 84 to transmit a message that transmission of a clock signal to the sink device 120 will start (step S114).

Next, the HDMI transmitting unit 112 of the source device 110 receives, for example, a <Report_Initiate_Clock_Transfer> command from the HDMI receiving unit 122 of the sink device 120 via the CEC line 84 to receive a report on the message that transmission of a clock signal will start from the sink device 120 (step S116).

Next, the control unit (not shown) of the source device 110 starts transmission of a clock signal (step S 118).

Next, the HDMI transmitting unit 112 of the source device 110 transmits, for example, a <Terminate_Clock_Transfer> command to the HDMI receiving unit 122 of the sink device 120 via the CEC line 84 to transmit a message that transmission of a clock signal to the sink device 120 will terminate (step S120).

Next, the HDMI transmitting unit 112 of the source device 110 receives, for example, a <Report_Terminate_Clock_Transfer> command from the HDMI receiving unit 122 of the sink device 120 via the CEC line 84 to receive a report on the message that transmission of a clock signal from the sink device 120 will terminate (step S122).

Next, the control unit (not shown) of the source device 110 terminates transmission of a clock signal (step S124) before terminating the present processing.

On the other hand, if, as a result of the determination in step S106, the source device 110 is capable of receiving/synchronizing a clock signal (Yes in step S106), the HDMI transmitting unit 112 of the source device 110 transmits, for example, a <Report_Clock_Transfer_Capability> command to the HDMI receiving unit 122 of the sink device 120 via the CEC line 84 to transmit a report on the transfer capability of a clock signal to the sink device 120 (step S126).

Next, the HDMI transmitting unit 112 of the source device 110 receives, for example, an <Initiate_Clock_Transfer> command from the HDMI receiving unit 122 of the sink device 120 via the CEC line 84 to receive a message that transmission of a clock signal from the sink device 120 will start (step S128).

Next, the HDMI transmitting unit 112 of the source device 110 transmits, for example, a <Report_Initiate_Clock_Transfer> command to the HDMI receiving unit 122 of the sink device 120 via the CEC line 84 to transmit a report on the message that transmission of a clock signal will start to the sink device 120 (step S130).

Next, the control unit (not shown) of the source device 110 starts reception of a clock signal (step S132).

Next, the HDMI transmitting unit 112 of the source device 110 receives, for example, a <Terminate_Clock_Transfer> command from the HDMI receiving unit 122 of the sink device 120 via the CEC line 84 to receive a message that transmission of a clock signal from the sink device 120 will terminate (step S134).

Next, the HDMI transmitting unit 112 of the source device 110 transmits, for example, a <Report_Terminate_Clock_Transfer> command to the HDMI receiving unit 122 of the sink device 120 via the CEC line 84 to transmit a report on the message that transmission of a clock signal from the sink device 120 will terminate (step S136).

Next, the control unit (not shown) of the source device 110 terminates reception of a clock signal (step S138) before terminating the present processing.

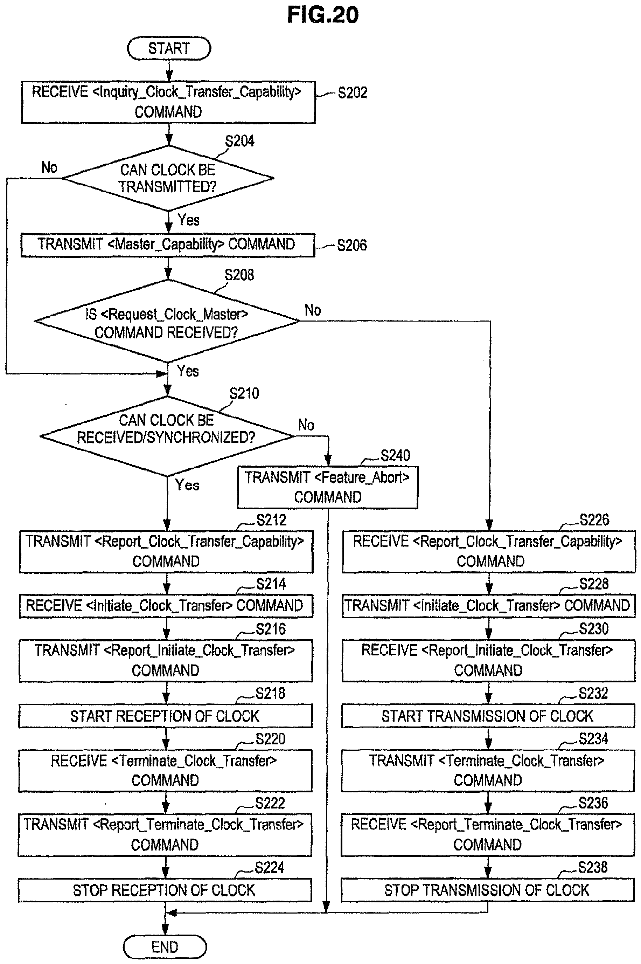

Next, transmission/reception processing of a clock signal performed by the sink device 120 in the AV system 100 in FIG. 2 will be described. FIG. 20 is a flow chart of transmission/reception processing of a clock signal performed by the sink device 120 in the AV system 100 in FIG. 2.

In FIG. 20, the HDMI receiving unit 122 of the sink device 120 receives, for example, an <Inquiry_Clock_Transfer_Capability> command from the HDMI transmitting unit 112 of the source device 110 via the CEC line 84 to receive an inquiry about the transfer capability of a clock signal (step S202).

Next, the control unit (not shown) of the sink device 120 determines whether the sink device 120 is capable of transmitting a clock signal (step S204).

If, as a result of the determination in step S204, the sink device 120 is incapable of transmitting a clock signal (No in step S204), the processing proceeds to step S210 described later.

If, as a result of the determination in step S204, the sink device 120 is capable of transmitting a clock signal (Yes in step S204), the HDMI receiving unit 122 of the sink device 120 transmits, for example, the <Master_Capability> command to the HDMI transmitting unit 112 of the source device 110 via the CEC line 84 to transmit a message that the sink device 120 will become the master side of a clock signal (step S206).

Next, the HDMI receiving unit 122 of the sink device 120 determines whether, for example, the <Request_Clock_Master> command is received from the HDMI transmitting unit 112 of the source device 110 via the CEC line 84 to determine whether a message indicating that the source device 110 is ready to become the master side of a clock signal is received (step S208).

If, as a result of the determination in step S208, a message indicating that the source device 110 is ready to become the master side of a clock signal is received (Yes in step S208), the control unit (not shown) of the sink device 120 determines whether the sink device 120 is capable of receiving/synchronizing a clock signal (step S210).

If, as a result of the determination in step S210, the sink device 120 is capable of receiving/synchronizing a clock signal (Yes in step S210), the HDMI receiving unit 122 of the sink device 120 transmits, for example, the <Report_Clock_Transfer_Capability> command to the HDMI transmitting unit 112 of the source device 110 via the CEC line 84 to transmit a report on the transfer capability of a clock signal to the source device 110 (step S212).

Next, the HDMI receiving unit 122 of the sink device 120 receives, for example, the <Initiate_Clock_Transfer> command from the HDMI transmitting unit 112 of the source device 110 via the CEC line 84 to receive a message that transmission of a clock signal from the source device 110 will start (step S214).

Next, the HDMI receiving unit 122 of the sink device 120 transmits, for example, the <Report_Initiate_Clock_Transfer> command to the HDMI transmitting unit 112 of the source device 110 via the CEC line 84 to transmit a report on the message that transmission of a clock signal will start to the source device 110 (step S216).

Next, the control unit (not shown) of the sink device 120 starts reception of a clock signal (step S218).

Next, the HDMI receiving unit 122 of the sink device 120 receives, for example, the <Terminate_Clock_Transfer> command from the HDMI transmitting unit 112 of the source device 110 via the CEC line 84 to receive a message that transmission of a clock signal from the source device 110 will terminate (step S220).

Next, the HDMI receiving unit 122 of the sink device 120 transmits, for example, the <Report_Terminate_Clock_Transfer> command to the HDMI transmitting unit 112 of the source device 110 via the CEC line 84 to transmit a report on the message that transmission of a clock signal to the source device 110 will terminate (step S222).

Next, the control unit (not shown) of the sink device 120 terminates reception of a clock signal (step S224) before terminating the present processing.

On the other hand, if, as a result of the determination in step S208, no message indicating that the source device 110 is ready to become the master side of a clock signal is received (No in step S208), the HDMI receiving unit 122 of the sink device 120 receives, for example, the <Report_Clock_Transfer_Capability> command from the HDMI transmitting unit 112 of the source device 110 via the CEC line 84 to receive a report on the transfer capability of a clock signal from the source device 110 (step S226).

Next, the HDMI receiving unit 122 of the sink device 120 transmits, for example, the <Initiate_Clock_Transfer> command to the HDMI transmitting unit 112 of the source device 110 via the CEC line 84 to transmit a message that transmission of a clock signal to the source device 110 will start (step S228).

Next, the HDMI receiving unit 122 of the sink device 120 receives, for example, the <Report-Initiate-Clock-Transfer> command from the HDMI transmitting unit 112 of the source device 110 via the CEC line 84 to receive a report on the message that transmission of a clock signal will start from the source device 110 (step S230).

Next, the control unit (not shown) of the sink device 120 starts transmission of a clock signal (step S232).

Next, the HDMI receiving unit 122 of the sink device 120 transmits, for example, the <Terminate_Clock_Transfer> command to the HDMI transmitting unit 112 of the source device 110 via the CEC line 84 to transmit a message that transmission of a clock signal to the source device 110 will terminate (step S234).

Next, the HDMI receiving unit 122 of the sink device 120 receives, for example, the <Report_Terminate_Clock_Transfer> command from the HDMI transmitting unit 112 of the source device 110 via the CEC line 84 to receive a report on the message that transmission of a clock signal from the source device 110 will terminate (step S236).

Next, the control unit (not shown) of the sink device 120 terminates transmission of a clock signal (step S238) before terminating the present processing.

On the other hand, if, as a result of the determination in step S210, the sink device 120 is incapable of receiving/synchronizing a clock signal (No in step S210), the HDMI receiving unit 122 of the sink device 120 transmits, for example, the <Feature_Abort> command to the HDMI transmitting unit 112 of the source device 110 via the CEC line 84 to transmit a message that transfer of a clock signal will stop (step S240) before terminating the present processing.

In the AV system shown in FIGS. 1 and 2 (also FIGS. 13 and 14), as described above, the sink device 120 is capable of transmitting/receiving a clock signal used for decoding a stream of broadcast wave content by the decoding unit 162 to/from the source device 110 via the HDMI cable 130 and the source device 110 is capable of transmitting/receiving a clock signal used for decoding a stream of broadcast wave content by the decoding unit 162 to/from the sink device 120 via the HDMI cable 130. The source device 110 such as an audio device normally has the clock generator 435 capable of generating a very high-quality clock signal mounted thereon. A clock signal for decoding the above stream, normally a clock signal of 27 MHz is generated by the clock generator 435 mounted on the side of the source device 110. The clock signal generated by the clock generator has the same source clock signal as a clock signal used for reproducing an audio signal of the source device 110, normally a clock signal of 48 kHz so that these clock signals are completely synchronized and maintain high quality with a reduced jitter component. The source device 110 transmits a clock signal for decoding the above stream to the sink device 120. Then, the sink device 120 uses the received clock signal as a reference clock signal to decode a stream stored in the buffer unit 161 and transmits audio data of the decoded stream to the source device 110. Since the received audio data is synchronized with a clock signal generated by the clock generator mounted on the source device 110, the source device 110 can improve reproduction quality of audio data by using the clock signal for reproducing audio data of the source device 110 as a reference clock signal for reproducing the audio data.

According to the transmission/reception processing of a clock signal in FIGS. 19 and 20, if the sink device 120 such as a television device includes a clock generator capable of generating a clock signal more precise than a clock signal generated by the clock generator 435 included in the source device 110 such as an audio device, the clock signal generated by the clock generator included in the sink device 120 can be transmitted to the source device 110. Therefore, audio data can be reproduced based on a more high-quality clock signal.

A clock signal is transmitted as a differential signal by using the Utility line 501 and the HPD line 502 in the present embodiment, but if an SPDIF signal is transmitted by using one line of the Utility line 501, the clock signal may be transmitted by using the other line of the Utility line 501.

### [Copyright protection]

In the AV system 100 shown in FIG. 2, providing copyright protection to an SPDIF signal transmitted from the sink device 120 to the source device 110 or an SPDIF signal transmitted from the source device 110 to the sink device 120 by encrypting such a signal can be considered. Copyright protection can be provided by, for example, DTCP (Digital Transmission Content Protection). In this case, authentication and key exchange may be performed between the source device 110 and the sink device 120 by using the above CDC function. A case when copyright protection is provided to an SPDIF signal transmitted from the sink device 120 to the source device 110 by encrypting the signal will be described below.

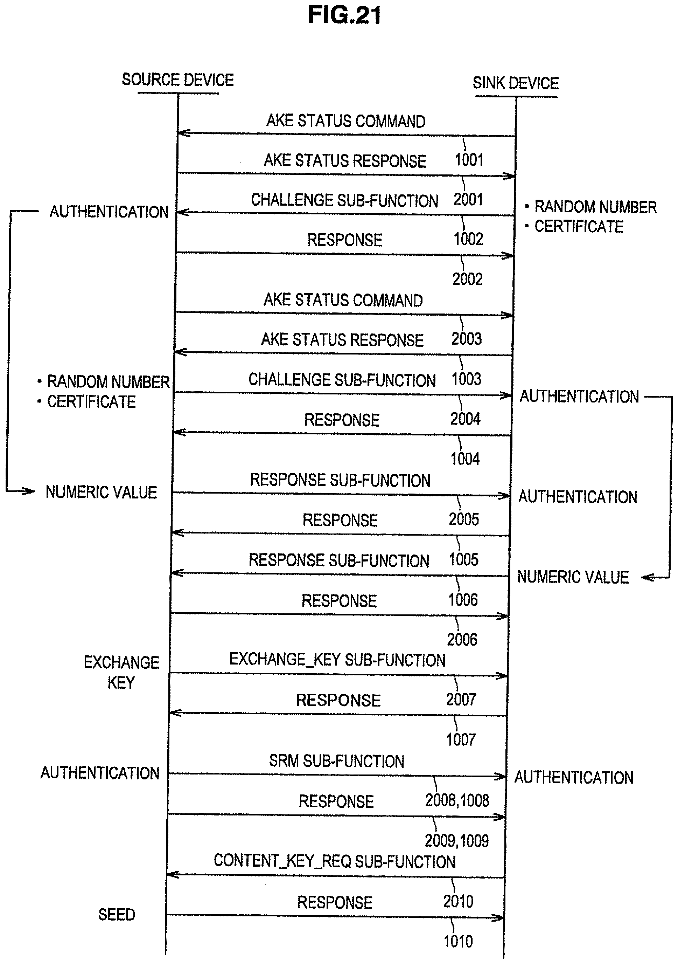

FIG. 21 shows a sequence example of authentication and key exchange processing. The sink device in FIG. 21 corresponds to the source device 110 of HDMI in the AV system 100 in FIG. 1. The source device in FIG.21 corresponds to the sink device 120 of HDMI in the AV system 100 in FIG. 1.

The authentication and key exchange processing is called AKE (Authentication and Key Exchange) processing in the DTCP standard. In this case, before digital data being exchanged, a sink device is authenticated to be a device capable of properly dealing with copy control information and then, the key for encryption and decryption is exchanged. Then, digital data is encrypted by a source device and the encrypted digital data is decrypted by the sink device. Accordingly, protection of digital content in the sink device is guaranteed and also illegal use of digital content by other devices is prevented.

When authentication processing is performed, the processing is to be started in the sink device to avoid duplicate processing. First, the sink device checks the status of the source device by using an AKE status command 1001. If, as a result, a response of being ready is received from the source device as an AKE status command 2001, the sink device issues a CHALLENGE sub-function 1002 by attaching a random number and a certificate thereto. The certificate is issued to each device by Digital Transmission Licensing Administrator (DTLA), which is a control mechanism of DTCP. The source device authenticates the certificate from the sink device and returns a result thereof to the sink device as a response 2002. Then, the source device performs the same procedure from the source device (2003, 1003, 2004, and 1004).

Subsequently, the source device calculates a predetermined numeric value based on the random number received from the sink device and transmits the numeric value to the sink device by using a RESPONSE sub-function 2005. Similarly, the sink device calculates a predetermined numeric value based on the random number received from the source device and transmits the numeric value to the source device by using a RESPONSE sub-function 1006. Each device that receives the RESPONSE sub-function 2005 or 1006 performs authentication processing.

Then, the source device transmits an exchange key by using an EXCHANGE_KEY sub-function 2007. When the sink device requests a seed for calculating a content key by using a CONTENT_KEY_REQ sub-function 2010, the source device transmits the seed as a response 1010. Accordingly, the sink device calculates the content key from the exchange key and the seed. Copy control information of content includes four types, Copy never, Copy one generation, No more copy, and Copy free, and the former three types are encrypted. Corresponding to the former three types, three types of content key are provided.

SRM (System Renewability Message) is exchanged by SRM sub-functions 1008 and 2008. The SRM is used to prevent other devices than authorized devices from being authenticated by transmitting a message updated for such authorized devices. The device that receives the SRM sub-function checks whether the transmitted SRM is correct by performing authentication processing.

The sequence example of authentication and key exchange processing shown in FIG. 21 is a procedure called full authentication and exchanges three types of key. A procedure called restricted authentication, by contract, exchanges only one type of key. In the case of restricted authentication, authentication processing can be performed in about half the time necessary for full authentication. Moreover, the sequence example of authentication and key exchange processing shown in FIG. 21 is an example in which copyright protection is provided by DTCP, but any other copyright protection technique than DTCP may be applied. For example, if HDCP (High-bandwidth Digital Content Protection system) is adopted for encrypting an SPDIF signal, a content key authenticated and generated by a DDC line or the like of HDMI may be used for encryption.

### <2. Second Embodiment>

### [Configuration example of the AV system]

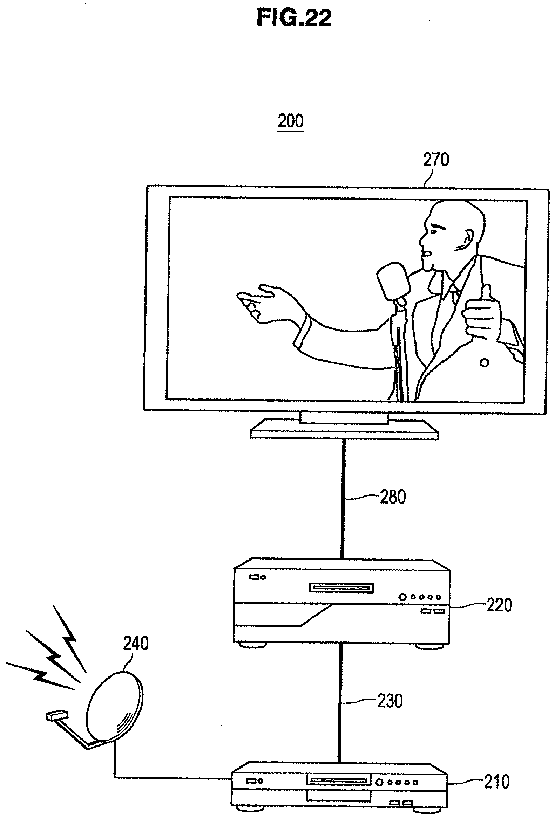

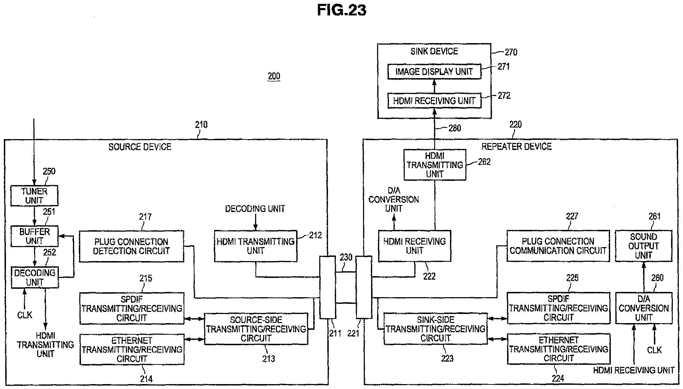

First, an AV system according to a second embodiment of the present invention will be described. FIG. 22 is a diagram schematically showing the configuration of an AV system according to the second embodiment of the present invention. FIG. 23 is a block diagram schematically showing the configuration of the AV system in FIG. 22.

In FIGS. 22 and 23, an AV system 200 is a system capable of reproducing broadcast wave content and includes a source device 210 such as a set-top box (STB), a repeater device 220 such as an audio device, and a sink device 270 such as a television apparatus. In the AV system 200, the source device 210, the repeater device 220, and the sink device 270 are HDMI HEAC compatible devices. An HDMI HEAC compatible device means having a communication unit that performs communication using a communication path with an HEAC+ line and HEAC- line constituting an HDMI cable.

The source device 210 and the repeater device 220 are connected via an HDMI cable 230. That is, the source device 210 includes an HDMI terminal 211 and the repeater device 220 includes an HDMI terminal 221. One end of the HDMI cable 230 is connected to the HDMI terminal 211 of the source device 210 and the other end of the HDMI cable 230 to the HDMI terminal 221 of the repeater device 220. The source device 210 also includes an antenna 240 to receive broadcast wave content. The repeater device 220 and the sink device 270 are connected via an HDMI cable 280.

The source device 210 includes an HDMI transmitting unit 212, a source-side transmitting/receiving circuit 213, and a plug connection detection circuit 217 that are connected to the HDMI terminal 211. An Ethernet transmitting/receiving circuit 214 is connected to the source-side transmitting/receiving circuit 213.

The HDMI transmitting unit 212 sends out baseband video (image) and audio data by communication conforming to HDMI from the HDMI terminal 211.

The source-side transmitting/receiving circuit 213 interfaces an Ethernet signal transmitted by using the HEAC+ line and HEAC- line constituting the HDMI cable 230 between the Ethernet transmitting/receiving circuit 214 and the HDMI cable 230.

The Ethernet transmitting/receiving circuit 214 is a circuit to transmit/receive an Ethernet signal and performs bi-directional communication conforming to, for example, the Internet protocol (IP). In this case, TCP (Transmission Control Protocol) or UDP (User Datagram Protocol) can be used as an upper layer of the Internet protocol (IP).

The plug connection detection circuit 217 detects connection of the repeater device 220 by comparing the potential of a terminal connected to the HPD line of the HDMI cable 230 with a reference potential.

The source device 210 also includes a tuner unit 250, a buffer unit 251, and a decoding unit 252. The tuner unit 250 receives broadcast wave content via the antenna 240 of the source device 210 to demodulate the received broadcast wave content. The buffer unit 251 temporarily stores a stream such as MPEG-TS demodulated by the tuner unit 250.

The decoding unit 252 reads a stream stored in the buffer unit 251 to decode the read stream. The decoding unit 252 bases decoding of the stream on a clock signal transmitted from the repeater device 220 or generated by the source device 210. Then, the decoding unit 252 inputs audio data and video data of the decoded stream into the HDMI transmitting unit 212 for transmission to the side of the repeater device 220.

The repeater device 220 includes an HDMI receiving unit 222 connected to the HDMI terminal 221 and a sink-side transmitting/receiving circuit 223, and a plug connection communication circuit 227. An Ethernet transmitting/receiving circuit 224 is connected to the sink-side transmitting/receiving circuit 223.

The HDMI receiving unit 222 receives baseband video and audio data transmitted in one direction from the source device by communication conforming to HDMI via the HDMI terminal 221. The HDMI receiving unit 222 inputs audio data of the received data into a D/A conversion unit 260. The HDMI receiving unit 222 also inputs video data of the received data into an HDMI transmitting unit 262 and the HDMI transmitting unit 262 transmits the video data to an HDMI receiving unit 272 of the sink device 270 via the HDMI cable 280. The HDMI receiving unit 272 of the sink device 270 inputs the received data into an image display unit 271. The image display unit 271 displays the input video data.

The sink-side transmitting/receiving circuit 223 interfaces an Ethernet signal transmitted by using the HEAC+ line and HEAC- line constituting the HDMI cable 230 between the Ethernet transmitting/receiving circuit 224 and the HDMI cable 230.

The Ethernet transmitting/receiving circuit 224 is, like the Ethernet transmitting/receiving circuit 214 of the source device 210, a circuit to transmit/receive an Ethernet signal and performs bi-directional communication based on, for example, the Internet protocol (IP).

The plug connection communication circuit 227 transmits to the source device 210 a message indicating that a sink device is connected to the repeater device 220 by biasing a terminal connected to the HPD line of the HDMI cable 230 to a predetermined voltage.

The repeater device 220 also includes the D/A conversion unit 260 and a sound output unit 261. The D/A conversion unit 260 makes a D/A conversion of digital audio data transmitted from the source device 210 and input from the HDMI receiving unit 222 to generate analog audio data. The D/A conversion unit 260 bases the D/A conversion of digital audio data on a clock signal transmitted from the source device 210 or generated by the repeater device 220. Then, the D/A conversion unit 260 inputs the generated analog audio data into the sound output unit 261. The sound output unit 261 reproduces the input audio data.

In the present embodiment, the repeater device 220 such as an audio device normally has a clock generator capable of generating a very high-quality clock signal mounted thereon and thus generates a clock signal for decoding the above stream, normally a clock signal of 27 MHz by the clock generator mounted on the repeater device 220. A clock signal generated by the clock generator has the same source clock signal as a clock signal used by the repeater device 220 for reproducing an audio signal, normally a clock signal of 48 kHz and thus, these clock signals are completely synchronized and maintain high quality with a reduced jitter component.

In the present embodiment, the repeater device 220 transmits a clock signal for decoding the above stream to the source device 210. Then, the source device 210 uses the received clock signal as a reference clock signal to decode a stream stored in the buffer unit 251 and transmits the decoded stream, that is, audio data and video data to the repeater device 220. Since the received audio data is synchronized with a clock signal generated by the clock generator mounted on the repeater device 220, the repeater device 220 can improve reproduction quality of audio data by using the clock signal as a reference clock signal for reproducing the audio data.

Also in the present embodiment, the decoding unit 252 resets storage content of the buffer unit 251 or inserts, for example, the same video and audio data as the video and audio data immediately before based on a result of decoding the above stream. If, for example, the decoding unit 252 detects a period in which broadcast wave content is silent and blacked out as a result of decoding the above stream, the decoding unit 252 resets the stream stored in the buffer unit 251 or inserts silent and blackout video data. Accordingly, the buffer amount of the buffer unit 251 can be controlled.

### [Configuration example of the source-side transmitting/receiving circuit, sink-side transmitting/receiving circuit and the like]

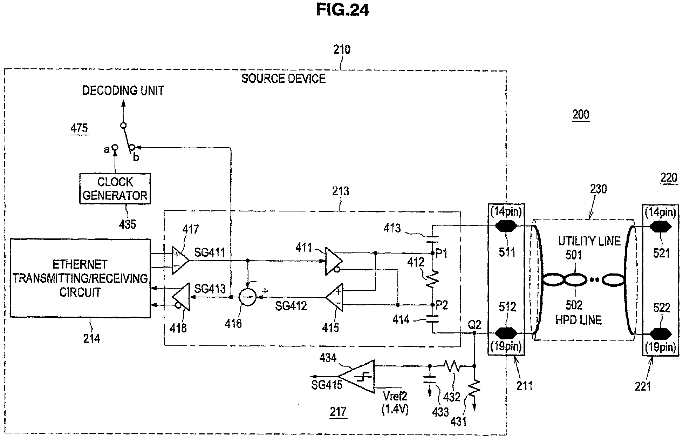

FIG. 24 shows a configuration example of the source-side transmitting/receiving circuit 213, the plug connection detection circuit 217 and the like of the source device 210 in the AV system 200. In FIG. 24, the same reference numerals are attached to corresponding components in FIG. 13 and a detailed description thereof will not be repeated.

FIG. 24 is different from FIG. 13 in that a clock signal obtained by a movable terminal of the changeover switch 475 is supplied as an operating clock of the decoding unit 252 and audio data is not input from the decoding unit 252 into an SPDIF transmitting/receiving circuit 215.

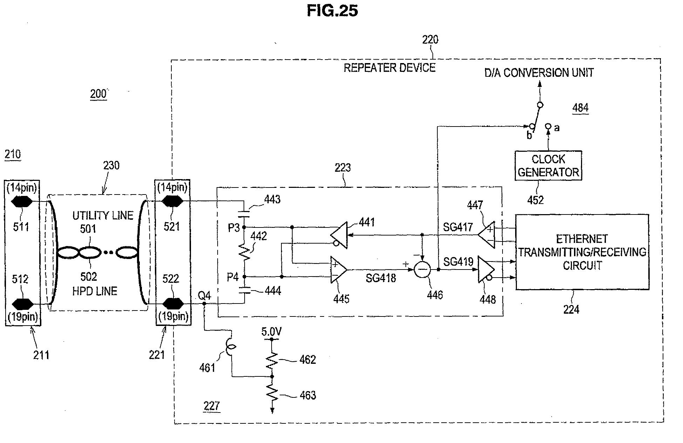

FIG. 25 shows a configuration example of the sink-side transmitting/receiving circuit 223, the plug connection communication circuit 227 and the like of the repeater device 220 in the AV system 200. In FIG. 25, the same reference numerals are attached to corresponding components in FIG. 14 and a detailed description thereof is will not be repeated.

FIG. 25 is different from FIG. 14 in that a clock signal obtained by a movable terminal of the changeover switch 484 is supplied as an operating clock of the D/A conversion unit 260 and audio data is not input from an SPDIF transmitting/receiving circuit 225 into the D/A conversion unit 260.

In the AV system shown in FIGS. 22 and 23 (also FIGS. 24 and 25), as described above, the source device 210 is capable of transmitting/receiving a clock signal used for decoding a stream of broadcast wave content by the decoding unit 252 to/from the repeater device 220 via the HDMI cable 230 and the repeater device 220 is capable of transmitting/receiving a clock signal used for decoding a stream of broadcast wave content by the decoding unit 252 to/from the source device 210 via the HDMI cable 230. The repeater device 220 such as an audio device normally has the clock generator 452 capable of generating a very high-quality clock signal mounted thereon. A clock signal for decoding the above stream, normally a clock signal of 27 MHz is generated by the clock generator 452 mounted on the side of the repeater device 220. The clock signal generated by the clock generator has the same source clock signal as a clock signal used for reproducing an audio signal of the repeater device 220, normally a clock signal of 48 kHz so that these clock signals are completely synchronized and maintain high quality with a reduced jitter component. The repeater device 220 transmits a clock signal for decoding the above stream to the source device 210. Then, the source device 210 uses the received clock signal as a reference clock signal to decode a stream stored in the buffer unit 251 and transmits audio data of the decoded stream to the repeater device 220. Since the received audio data is synchronized with a clock signal generated by the clock generator mounted on the repeater device 220, the repeater device 220 can improve reproduction quality of audio data by using the clock signal for reproducing audio data of the repeater device 220 as a reference clock signal for reproducing the audio data.

A clock signal is transmitted as a differential signal by using the Utility line 501 and the HPD line 502 in the present embodiment, but the clock signal may be transmitted by using one of the Utility line 501 and the HPD line 502 or using both lines to transmit as an in-phase signal.

Each of the above embodiments assumes the interface of the HDMI standard as a transmission path to connect each device, but is also applicable to other similar transmission standards.

An embodiment of the present invention may also be achieved by supplying a storage medium storing program code of software that realizes each of the above embodiments to a system or an apparatus and the program code stored in the storage medium being read and executed by a computer (or a CPU, MPU or the like) of the system or the apparatus.

In such a case, program code read from the storage medium realizes the function of each embodiment so that the program code and the storage medium storing the program code constitute embodiments of the present invention.

As the storage medium to supply program code, for example, a floppy (registered trademark) disk, a hard disk, a magneto-optical disk, an optical disk such as a CD-ROM, a CD-R, a CD-RW, a DVD-ROM, a DVD-RAM, a DVD-RW, and a DVD+RW, a magnetic tape, a nonvolatile memory card, and a ROM may be used. Or, the program code may be downloaded via a network.

A case when not only the functions of each of the above embodiments are realized by executing program code read by a computer, but also a portion or all of actual processing is performed by the OS (operating system) running on the computer based on instructions of the program code to realize the functions of each of the above embodiments by the processing is also included in the scope of the present invention.

Further, a case where program code read from a storage medium is written into a memory included in a function expansion board inserted into a computer or a function expansion unit connected to the computer and then, a CPU or the like included in the expansion board or the expansion unit actually performs a portion or all of processing of an expansion function thereof based on instructions of the program code to realize the functions of each of the above embodiments by the processing is also included in the scope of the present invention.

It should be understood by those skilled in the art that various modifications, combinations, sub-combinations and alterations may occur depending on design requirements and other factors insofar as they are within the scope of the appended claims or the equivalents thereof.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A content reproduction system (100) comprising:
a content receiving apparatus (120) including:
a demodulating unit (160) that receives and demodulates broadcast wave content;
a storage unit (161) that stores an audio video (AV) stream as a demodulation result by the demodulating unit;
a decoding unit (162) that reads, from the storage unit (161), the AV stream stored in the storage unit (161), and that decodes the read AV stream;
a transmitting unit (125) that transmits digital audio data of a decoding result by the decoding unit (162) to a sound reproduction apparatus (110) via a transmission path;
means for receiving an inquiry about a clock master capability for the content receiving apparatus (120) to be a clock master to the sound reproduction apparatus (110) and for transmitting in response a clock master indication to the sound reproduction apparatus (110); and
a first transmitting/receiving unit (123) capable of transmitting/receiving a clock signal used for decoding the AV stream by the decoding unit (162) to/from the sound reproduction apparatus (110) via the transmission path; and
the sound reproduction apparatus (110) including:
a receiving unit (115) that receives the digital audio data transmitted by the transmitting unit (125) via the transmission path;
means for transmitting to the content receiving apparatus (120) an inquiry about a clock master capability for the content receiving apparatus (120) to be a clock master and for receiving in response a master clock indication from the content receiving apparatus (120);
a second transmitting/receiving (113) unit capable of transmitting/receiving the clock signal used for decoding the AV stream by the decoding unit (162) to/from the content receiving apparatus (120) via the transmission path;
a control unit configured to determine, if it is determined from the master clock indication that the content receiving apparatus (120) is ready to become the clock master, whether the sound reproduction apparatus (110) is capable of receiving and/or synchronising a clock signal; and
a second transmitting unit (112) configured to transmit, if it is determined that the sound reproduction apparatus (110) is not capable of receiving/ synchronising a clock signal, an indication to the content receiving apparatus (120) that the sound reproduction apparatus (110) should be the clock master,
wherein, if the sound reproduction apparatus (110) is the clock master,
the second transmitting/receiving unit (113) is configured to transmit the clock signal to the content receiving apparatus (120), and
the first transmitting/receiving unit (123) is configured
to receive the clock signal from the sound reproduction apparatus (110), to use the clock signal as a reference clock signal to decode the AV stream to reproduce the digital audio data, and
to transmit the reproduced digital audio data to the sound reproduction apparatus (110),
wherein if the content receiving apparatus (120) is the clock master,
the first transmitting/receiving unit (123) is configured to transmit the clock signal to the sound reproduction apparatus (110), and
the second transmitting/receiving unit (113) is configured to receive the clock signal for use by the sound reproduction apparatus (110) in reproducing audio.

2. The content reproduction system (110) according to claim 1,
wherein the second transmitting/receiving unit transmits (113) the clock signal generated by a clock signal generator (435) included in the sound reproduction apparatus (110) to the content receiving apparatus (120) as the clock signal used by the decoding unit (162) for decoding the AV stream,
the first transmitting/receiving unit (123) receives the clock signal transmitted by the second transmitting/receiving unit (113), and
the decoding unit (162) uses the clock signal received by the first transmitting/receiving unit (123) as the clock signal used for decoding the AV stream.

3. The content reproduction system (100) according to claim 1,
wherein in response to the clock signal generated by a clock signal generator (452) included in the content receiving apparatus (120) being more precise than the clock signal generated by a clock signal generator (435) included in the sound reproduction apparatus (110),
the decoding unit (162) uses the clock signal generated by the clock signal generator (452) included in the content receiving apparatus (120) as the clock signal used for decoding the AV stream,
the first transmitting/receiving unit (123) transmits the clock signal generated by the clock signal generator (452) included in the content receiving apparatus (120) to the sound reproduction apparatus (110), and
the second transmitting/receiving unit (113) receives the clock signal transmitted by the first transmitting/receiving unit (123).

4. The content reproduction system (100) according to claim 1,
wherein the decoding unit (162) resets storage content of the storage unit (162) or inserts the same video and audio data as video and audio data immediately before based on the decoding result of the AV stream.

5. A content receiving apparatus (120) comprising:
a demodulating unit (160) that receives and demodulates broadcast wave content;
a storage unit (161) that stores an audio video (AV) stream as a demodulation result by the demodulating unit (160);
a decoding unit (162) that reads, from the storage unit (161), the AV stream stored in the storage unit (161), and that decodes the read AV stream;
a transmitting unit (125) that transmits digital audio data of a decoding result by the decoding unit (162) to a sound reproduction apparatus (110) via a transmission path;
means for receiving an inquiry about a clock master capability for the content receiving apparatus (120) to be a clock master to the sound reproduction apparatus (110) and for transmitting in response a clock master indication to the sound reproduction apparatus (110); and
a transmitting/receiving unit (123) capable of transmitting/receiving a clock signal used for decoding the AV stream by the decoding unit (162) to/from the sound reproduction apparatus (110) via the transmission path in response to the clock commands transmitted by and received at the content receiving apparatus (120), wherein if the master clock indication indicates that the content receiving apparatus (120) cannot be the clock master, and if the sound reproduction apparatus (110) is not capable of receiving and/or synchronising a clock signal, the content receiving apparatus (120) is configured to receive an indication from the sound reproduction apparatus (110) that the sound reproduction apparatus (110) should be the clock master,
wherein, if the sound reproduction apparatus (110) is the clock master, the transmitting/receiving unit (123) is configured
to receive the clock signal from sound reproduction apparatus (110), to use the clock signal as a reference clock signal to decode the AV stream to reproduce the digital audio data and
to transmit the reproduced digital audio data to the sound reproduction apparatus (110),
wherein, if the content receiving apparatus (120) is the clock master, the transmitting/receiving unit (123) is configured to transmit the clock signal to the sound reproduction apparatus (110) for use by the sound reproduction apparatus (110) in reproducing audio.

6. A sound reproduction apparatus (110) comprising:
a receiving unit (115) that receives digital audio data transmitted from a content receiving apparatus (120) via a transmission path;
means for transmitting to the content receiving apparatus (120) an inquiry about a clock master capability for the content receiving apparatus (120) to be a clock master and for receiving in response a master clock indication from the content receiving apparatus (120);
a transmitting/receiving unit (113) capable of transmitting/receiving a clock signal used for decoding an audio video, AV, stream by the content receiving apparatus (120) to/from the content receiving apparatus (120) via the transmission path; and
a control unit configured to determine, if it is determined from the master clock indication that the content receiving apparatus (120) is ready to become the clock master, whether the sound reproduction apparatus (110) is capable of receiving and/or synchronising a clock signal; and
a transmitting unit (112) configured to transmit, if it is determined that the sound reproduction apparatus (110) is not capable of receiving and/or synchronising a clock signal, an indication to the content receiving apparatus (120) that the sound reproduction apparatus (110) should be the clock master,
wherein, if the sound reproduction apparatus (110) is the clock master,
the transmitting/receiving unit (113) is configured
to transmit the clock signal to the content receiving apparatus (120), for use as a reference clock signal to decode the AV stream to reproduce the digital audio data and
to receive the reproduced digital audio data from the content receiving apparatus (120),
wherein if the content receiving apparatus (120) is the clock master the transmitting/receiving unit (113) is configured to receive the clock signal for use by the sound reproduction apparatus (110) in reproducing audio.

7. A content reproduction method, comprising the steps of:
receiving and demodulating broadcast wave content by a content receiving apparatus (120);
storing an audio video (AV) stream as a demodulation result by the content receiving apparatus(120);
reading and decoding the stored AV stream by the content receiving apparatus (120);
transmitting digital audio data of a decoding result to a sound reproduction apparatus (110) via a transmission path by the content receiving apparatus (120);
receiving an inquiry about a clock master capability for the content receiving apparatus (120) to be a clock master to the sound reproduction apparatus (110);
transmitting in response a clock master indication to the sound reproduction apparatus (110);
transmitting/receiving a clock signal used for decoding the AV stream to/from the sound reproduction apparatus (110) via the transmission path by the content receiving apparatus (120) in response to the clock commands transmitted and received by the content receiving apparatus (120);
receiving the digital audio data transmitted via the transmission path by the sound reproduction apparatus (110);
transmitting to the content receiving apparatus (120) an inquiry about a clock master capability for the content receiving apparatus (120) to be a clock master;
receiving in response a master clock indication from the content receiving apparatus (120);
determining, if it is determined from the master clock indication that the content receiving apparatus (120) is ready to become the clock master, whether the sound reproduction apparatus (110) is capable of receiving and/or synchronising a clock signal; and
transmitting, if it is determined that the sound reproduction apparatus (110) is not capable of receiving and/or synchronising a clock signal, an indication to the content receiving apparatus (120) that the sound reproduction apparatus (110) should be the clock master,
wherein, if the sound reproduction apparatus (110) is the clock master, the method comprises
transmitting the clock signal from the sound reproduction apparatus (110) to the content receiving apparatus (120),
receiving the clock signal at the content receiving apparatus (120), using the clock signal as a reference clock signal to decode the AV stream to reproduce the digital audio data,
transmitting from the content receiving apparatus (120) the reproduced digital audio data to the sound reproduction apparatus (110),
wherein, if the content receiving apparatus (120) is the clock master, the method comprises
transmitting the clock signal from the content receiving apparatus (120) to the sound reproduction apparatus (110), and
receiving the clock signal at the sound reproduction apparatus (110) for use by the sound reproduction apparatus (110) in reproducing audio.

8. A program causing a content receiving apparatus to function in accordance with the method of claim 7.

## Patentansprüche

1. Inhaltsreproduktionssystem (100), das Folgendes umfasst:
eine Inhaltsempfangsvorrichtung (120), die Folgendes beinhaltet:
eine Demoduliereinheit (160), die Rundfunkwelleninhalt empfängt und demoduliert;
eine Speichereinheit (161), die einen Audio-Video-Strom bzw. AV-Strom als ein Demodulierungsergebnis der Demoduliereinheit speichert;
eine Decodiereinheit (162), die, von der Speichereinheit (161), den in der Speichereinheit (161) gespeicherten AV-Strom ausliest und die den ausgelesenen AV-Strom decodiert;
eine Übermittlungseinheit (125), die digitale Audiodaten eines Decodierergebnisses der Decodiereinheit (162) über einen Übermittlungspfad an eine Tonreproduktionsvorrichtung (110) übermittelt;
Mittel zum Empfangen einer Anfrage über eine Taktmasterfähigkeit für die Inhaltsempfangsvorrichtung (120), ein Taktmaster für die Tonreproduktionsvorrichtung (110) zu sein, und, als Reaktion, zum Übermitteln einer Taktmasteranzeige an die Tonreproduktionsvorrichtung (110); und
eine erste Übermittlungs-/Empfangseinheit (123), die fähig ist zum Übermitteln/Empfangen über den Übermittlungspfad eines Taktsignals, das zum Decodieren des AV-Stroms durch die Decodiereinheit (162) verwendet wird, zu/von der Tonreproduktionsvorrichtung (110); und
wobei die Tonreproduktionsvorrichtung (110) Folgendes beinhaltet:
eine Empfangseinheit (115), die die von der Übermittlungseinheit (125) über den Übermittlungspfad übermittelten digitalen Audiodaten empfängt;
Mittel zum Übermitteln, an die Inhaltsempfangsvorrichtung (120), einer Anfrage über eine Taktmasterfähigkeit für die Inhaltsempfangsvorrichtung (120), ein Taktmaster zu sein, und, als Reaktion, zum Empfangen einer Taktmasteranzeige von der Inhaltsempfangsvorrichtung (120) ;
eine zweite Übermittlungs-/Empfangseinheit (113), die fähig ist zum Übermitteln/Empfangen über den Übermittlungspfad des Taktsignals, das zum Decodieren des AV-Stroms durch die Decodiereinheit (162) verwendet wird, zu/von der Inhaltsempfangsvorrichtung (120);
eine Steuereinheit, die ausgelegt ist zum Bestimmen, wenn aus der Taktmasteranzeige bestimmt wurde, dass die Inhaltsempfangsvorrichtung (120) bereit ist, der Taktmaster zu werden, ob die Tonreproduktionsvorrichtung (110) fähig ist zum Empfangen und/oder Synchronisieren eines Taktsignals; und
eine zweite Übermittlungseinheit (112), die ausgelegt ist zum Übermitteln, wenn bestimmt wird, dass die Tonreproduktionsvorrichtung (110) nicht fähig zum Empfangen/Synchronisieren eines Taktsignals ist, einer Anzeige an die Inhaltsempfangsvorrichtung (120), dass die Tonreproduktionsvorrichtung (110) der Taktmaster sein sollte,
wobei, wenn die Tonreproduktionsvorrichtung (110) der Taktmaster ist,
die zweite Übermittlungs-/Empfangseinheit (113) ausgelegt ist zum Übermitteln des Taktsignals an die Inhaltsempfangsvorrichtung (120), und
die erste Übermittlungs-/Empfangseinheit (123) ausgelegt ist
zum Empfangen des Taktsignals von der Tonreproduktionsvorrichtung (110), zum Verwenden des Taktsignals als ein Referenztaktsignal, um den AV-Strom zu decodieren, um die digitalen Audiodaten zu reproduzieren, und
zum Übermitteln der reproduzierten digitalen Audiodaten an die Tonreproduktionsvorrichtung (110), wobei, wenn die Inhaltsempfangsvorrichtung (120) der Taktmaster ist,
die erste Übermittlungs-/Empfangseinheit (123) ausgelegt ist zum Übermitteln des Taktsignals an die Tonreproduktionsvorrichtung (110), und
die zweite Übermittlungs-/Empfangseinheit (113) ausgelegt ist zum Empfangen des Taktsignals zur Verwendung der Tonreproduktionsvorrichtung (110) beim Reproduzieren von Audio.

2. Inhaltsreproduktionssystem (110) nach Anspruch 1, wobei die zweite Übermittlungs-/Empfangseinheit (113) das von einem Taktsignalgenerator (435), der in der Tonreproduktionsvorrichtung (110) enthalten ist, erzeugte Taktsignal an die Inhaltsempfangsvorrichtung (120) als das von der Decodiereinheit (162) zum Decodieren des AV-Stroms verwendete Taktsignal übermittelt,
die erste Übermittlungs-/Empfangseinheit (123) das von der zweiten Übermittlungs-/Empfangseinheit (113) übermittelte Taktsignal empfängt und die Decodiereinheit (162) das von der ersten Übermittlungs-/Empfangseinheit (123) empfangene Taktsignal als das zum Decodieren des AV-Stroms verwendete Taktsignal verwendet.

3. Inhaltsreproduktionssystem (100) nach Anspruch 1, wobei als Reaktion darauf, dass das von einem Taktsignalgenerator (452), der in der Inhaltsempfangsvorrichtung (120) enthalten ist, erzeugte Taktsignal präziser als das von einem Taktsignalgenerator (435), der in der Tonreproduktionsvorrichtung (110) enthalten ist, erzeugte Taktsignal ist,
die Decodiereinheit (162) das von dem Taktsignalgenerator (452), der in der Inhaltsempfangsvorrichtung (120) enthalten ist, erzeugte Taktsignal als das zum Decodieren des AV-Stroms verwendete verwendet,
die erste Übermittlungs-/Empfangseinheit (123) das von dem Taktsignalgenerator (452), der in der Inhaltsempfangsvorrichtung (120) enthalten ist, erzeugte Taktsignal an die Tonreproduktionsvorrichtung (110) übermittelt, und
die zweite Übermittlungs-/Empfangseinheit (113) das von der ersten Übermittlungs-/Empfangseinheit (123) übermittelte Taktsignal empfängt.

4. Inhaltsreproduktionssystem (100) nach Anspruch 1, wobei die Decodiereinheit (162) den Speicherinhalt der Speichereinheit (162) zurücksetzt oder unmittelbar davor dieselben Video- und Audiodaten als Video- und Audiodaten einsetzt, basierend auf dem Decodierergebnis des AV-Stroms.

5. Inhaltsempfangsvorrichtung (120), die Folgendes umfasst:
eine Demoduliereinheit (160), die Rundfunkwelleninhalt empfängt und demoduliert;
eine Speichereinheit (161), die einen Audio-Video-Strom bzw. AV-Strom als ein Demodulierungsergebnis der Demoduliereinheit (160) speichert;
eine Decodiereinheit (162), die, von der Speichereinheit (161), den in der Speichereinheit (161) gespeicherten AV-Strom ausliest und die den ausgelesenen AV-Strom decodiert;
eine Übermittlungseinheit (125), die digitale Audiodaten eines Decodierergebnisses der Decodiereinheit (162) über einen Übermittlungspfad an eine Tonreproduktionsvorrichtung (110) übermittelt;
Mittel zum Empfangen einer Anfrage über eine Taktmasterfähigkeit für die Inhaltsempfangsvorrichtung (120), ein Taktmaster für die Tonreproduktionsvorrichtung (110) zu sein, und, als Reaktion, zum Übermitteln einer Taktmasteranzeige an die Tonreproduktionsvorrichtung (110); und
eine Übermittlungs-/Empfangseinheit (123), die fähig ist zum Übermitteln/Empfangen über den Übermittlungspfad eines Taktsignals, das zum Decodieren des AV-Stroms durch die Decodiereinheit (162) verwendet wird, zu/von der Tonreproduktionsvorrichtung (110), als Reaktion auf die von der Inhaltsempfangsvorrichtung (120) übermittelten und an dieser empfangenen Taktbefehle, wobei, wenn die Mastertaktanzeige anzeigt, dass die Inhaltsempfangsvorrichtung (120) nicht der Taktmaster sein kann, und, wenn die Tonreproduktionsvorrichtung (110) nicht fähig ist zum Empfangen und/oder Synchronisieren eines Taktsignals, die Inhaltsempfangsvorrichtung (120) ausgelegt ist zum Empfangen einer Anzeige von der Tonreproduktionsvorrichtung (110), dass die Tonreproduktionsvorrichtung (110) der Taktmaster sein sollte,
wobei, wenn die Tonreproduktionsvorrichtung (110) der Taktmaster ist, die Übermittlungs-/Empfangseinheit (123) ausgelegt ist
zum Empfangen des Taktsignals von der Tonreproduktionsvorrichtung (110), zum Verwenden des Taktsignals als ein Referenztaktsignal, um den AV-Strom zu decodieren, um die digitalen Audiodaten zu reproduzieren, und
zum Übermitteln der reproduzierten digitalen Audiodaten an die Tonreproduktionsvorrichtung (110),
wobei, wenn die Inhaltsempfangsvorrichtung (120) der Taktmaster ist, die Übermittlungs-/Empfangseinheit (123) ausgelegt ist zum Übermitteln des Taktsignals an die Tonreproduktionsvorrichtung (110) zum Verwenden beim Reproduzieren von Audio durch die Tonreproduktionsvorrichtung (110).

6. Tonreproduktionsvorrichtung (110), die Folgendes umfasst:
eine Empfangseinheit (115), die die von einer Inhaltsempfangsvorrichtung (120) über einen Übermittlungspfad übermittelten digitalen Audiodaten empfängt;
Mittel zum Übermitteln, an die Inhaltsempfangsvorrichtung (120), einer Anfrage über eine Taktmasterfähigkeit für die Inhaltsempfangsvorrichtung (120), ein Taktmaster zu sein, und, als Reaktion, zum Empfangen einer Mastertaktanzeige von der Inhaltsempfangsvorrichtung (120) ;
eine Übermittlungs-/Empfangseinheit (113), die fähig ist zum Übermitteln/Empfangen über den Übermittlungspfad eines Taktsignals, das zum Decodieren eines AV-Stroms durch die Inhaltsempfangsvorrichtung (120) verwendet wird, zu/von der Inhaltsempfangsvorrichtung (120); und
eine Steuereinheit, die ausgelegt ist zum Bestimmen, wenn aus der Mastertaktanzeige bestimmt wurde, dass die Inhaltsempfangsvorrichtung (120) bereit ist, der Taktmaster zu werden, ob die Tonreproduktionsvorrichtung (110) fähig ist zum Empfangen und/oder Synchronisieren eines Taktsignals; und
eine Übermittlungseinheit (112), die ausgelegt ist zum Übermitteln, wenn bestimmt wird, dass die Tonreproduktionsvorrichtung (110) nicht fähig zum Empfangen und/oder Synchronisieren eines Taktsignals ist, einer Anzeige an die Inhaltsempfangsvorrichtung (120), dass die Tonreproduktionsvorrichtung (110) der Taktmaster sein sollte,
wobei, wenn die Tonreproduktionsvorrichtung (110) der Taktmaster ist,
die Übermittlungs-/Empfangseinheit (113) ausgelegt ist zum Übermitteln des Taktsignals an die Inhaltsempfangsvorrichtung (120), zur Verwendung als ein Referenztaktsignal zum Decodieren des AV-Stroms, um die digitalen Audiodaten zu reproduzieren, und
zum Empfangen der reproduzierten digitalen Audiodaten von der Inhaltsempfangsvorrichtung (120), wobei, wenn die Inhaltsempfangsvorrichtung (120) der Taktmaster ist, die Übermittlungs-/Empfangseinheit (113) ausgelegt ist zum Empfangen des Taktsignals zur Verwendung durch die Tonreproduktionsvorrichtung (110) beim Reproduzieren von Audio.

7. Inhaltsreproduktionsverfahren, das die folgenden Schritte umfasst:
Empfangen und Demodulieren von Rundfunkwelleninhalt durch eine Inhaltsempfangsvorrichtung (120);
Speichern eines Audio-Video-Stroms bzw. AV-Stroms als ein Demodulierungsergebnis der Inhaltsempfangsvorrichtung (120);
Auslesen und Decodieren des gespeicherten AV-Stroms durch die Inhaltsempfangsvorrichtung (120);
Übermitteln von digitalen Audiodaten eines Decodierergebnisses über einen Übermittlungspfad an eine Tonreproduktionsvorrichtung (110) durch die Inhaltsempfangsvorrichtung (120);
Empfangen einer Anfrage über eine Taktmasterfähigkeit für die Inhaltsempfangsvorrichtung (120), ein Taktmaster für die Tonreproduktionsvorrichtung (110) zu sein;
Übermitteln einer Taktmasteranzeige an die Tonreproduktionsvorrichtung (110) als Reaktion;
Übermitteln/Empfangen über den Übermittlungspfad eines Taktsignals, das zum Decodieren des AV-Stroms durch die Inhaltsempfangsvorrichtung (120) verwendet wird, zu/von der Tonreproduktionsvorrichtung (110), als Reaktion auf die durch die Inhaltsempfangsvorrichtung (120) übermittelten und empfangenen Taktbefehle;
Empfangen der von der Tonreproduktionsvorrichtung (110) über den Übermittlungspfad übermittelten digitalen Audiodaten;
Übermitteln, an die Inhaltsempfangsvorrichtung (120), einer Anfrage über eine Taktmasterfähigkeit für die Inhaltsempfangsvorrichtung (120), ein Taktmaster zu sein;
Empfangen einer Mastertaktanzeige von der Inhaltsempfangsvorrichtung (120) als Reaktion; und
Bestimmen, wenn aus der Mastertaktanzeige bestimmt wurde, dass die Inhaltsempfangsvorrichtung (120) bereit ist, der Taktmaster zu werden, ob die Tonreproduktionsvorrichtung (110) fähig ist zum Empfangen und/oder Synchronisieren eines Taktsignals; und
Übermitteln, wenn bestimmt wird, dass die Tonreproduktionsvorrichtung (110) nicht fähig zum Empfangen und/oder Synchronisieren eines Taktsignals ist, einer Anzeige an die Inhaltsempfangsvorrichtung (120), dass die Tonreproduktionsvorrichtung (110) der Taktmaster sein sollte,
wobei, wenn die Tonreproduktionsvorrichtung (110) der Taktmaster ist, das Verfahren Folgendes umfasst:
Übermitteln des Taktsignals von der Tonreproduktionsvorrichtung (110) an die Inhaltsempfangsvorrichtung (120),
Empfangen des Taktsignals an der Inhaltsempfangsvorrichtung (120), Verwenden des Taktsignals als ein Referenztaktsignal, um den AV-Strom zu decodieren, um die digitalen Audiodaten zu reproduzieren,
Übermitteln von der Inhaltsempfangsvorrichtung (120) der reproduzierten digitalen Audiodaten an die Tonreproduktionsvorrichtung (110),
wobei, wenn die Inhaltsempfangsvorrichtung (120) der Taktmaster ist, das Verfahren Folgendes umfasst:
Übermitteln des Taktsignals von der Inhaltsempfangsvorrichtung (120) an die Tonreproduktionsvorrichtung (110), und
Empfangen des Taktsignals an der Tonreproduktionsvorrichtung (110) zur Verwendung durch die Tonreproduktionsvorrichtung (110) beim Reproduzieren von Audio.

8. Programm, das eine Inhaltsempfangsvorrichtung veranlasst, gemäß dem Verfahren nach Anspruch 7 zu funktionieren.

## Revendications

1. Système de reproduction de contenu (100), comprenant :
un appareil de réception de contenu (120) comprenant :
une unité de démodulation (160) qui reçoit et démodule un contenu d'ondes de radiodiffusion ;
une unité de stockage (161) qui stocke un flux audio-vidéo (AV) en guise de résultat de démodulation par l'unité de démodulation ;
une unité de décodage (162) qui lit, à partir de l'unité de stockage (161), le flux AV stocké dans l'unité de stockage (161), et qui décode le flux AV lu ;
une unité de transmission (125) qui transmet des données audio numériques d'un résultat de décodage par l'unité de décodage (162) à un appareil de reproduction sonore (110) par l'intermédiaire d'une voie de transmission ;
un moyen permettant de recevoir une requête sur une capacité d'horloge maîtresse de l'appareil de réception de contenu (120) à être une horloge maîtresse pour l'appareil de reproduction sonore (110), et permettant de transmettre en réponse une indication d'horloge maîtresse à l'appareil de reproduction sonore (110) ; et
une première unité de transmission/réception (123) capable de transmettre/recevoir un signal d'horloge utilisé pour décoder le flux AV par l'unité de décodage (162) à/en provenance de l'appareil de reproduction sonore (110) par l'intermédiaire de la voie de transmission ; et
l'appareil de reproduction sonore (110) comprenant :
une unité de réception (115) qui reçoit les données audio numériques transmises par l'unité de transmission (125) par l'intermédiaire de la voie de transmission ;
un moyen permettant de transmettre à l'appareil de réception de contenu (120) une requête sur une capacité d'horloge maîtresse de l'appareil de réception de contenu (120) à être une horloge maîtresse, et permettant de recevoir en réponse une indication d'horloge maîtresse en provenance de l'appareil de réception de contenu (120) ;
une seconde unité de transmission/réception (113) capable de transmettre/recevoir le signal d'horloge utilisé pour décoder le flux AV par l'unité de décodage (162) à/en provenance de l'appareil de réception de contenu (120) par l'intermédiaire de la voie de transmission ;
une unité de contrôle conçue pour déterminer, s'il est déterminé à partir de l'indication d'horloge maîtresse que l'appareil de réception de contenu (120) est prêt à devenir l'horloge maîtresse, si l'appareil de reproduction sonore (110) est capable de recevoir et/ou synchroniser un signal d'horloge ; et
une seconde unité de transmission (112) conçue pour transmettre, s'il est déterminé que l'appareil de reproduction sonore (110) n'est pas capable de recevoir/synchroniser un signal d'horloge, une indication à l'appareil de réception de contenu (120) sur le fait que l'appareil de reproduction sonore (110) doit être l'horloge maîtresse,
si l'appareil de reproduction sonore (110) est l'horloge maîtresse,
alors la seconde unité de transmission/réception (113) est conçue pour transmettre le signal d'horloge à l'appareil de réception de contenu (120), et
la première unité de transmission/réception (123) est conçue pour
recevoir le signal d'horloge en provenance de l'appareil de reproduction sonore (110) afin d'utiliser le signal d'horloge en guise de signal d'horloge de référence pour décoder le flux AV afin de reproduire les données audio numériques, et
transmettre les données audio numériques reproduites à l'appareil de reproduction sonore (110),
si l'appareil de réception de contenu (120) est l'horloge maîtresse,
alors la première unité de transmission/réception (123) est conçue pour transmettre le signal d'horloge à l'appareil de reproduction sonore (110), et
la seconde unité de transmission/réception (113) est conçue pour recevoir le signal d'horloge en vue de son utilisation par l'appareil de reproduction sonore (110) pour reproduire les données audio.

2. Système de reproduction de contenu (110) selon la revendication 1,
dans lequel l'unité de transmission/réception (113) transmet le signal d'horloge généré par un générateur de signal d'horloge (435) inclus dans l'appareil de reproduction sonore (110) à l'appareil de réception de contenu (120) en guise de signal d'horloge utilisé par l'unité de décodage (162) pour décoder le flux AV,
la première unité de transmission/réception (123) reçoit le signal d'horloge transmis par la seconde unité de transmission/réception (113), et
l'unité de décodage (162) utilise le signal d'horloge reçu par la première unité de transmission/réception (123) en guise de signal d'horloge utilisé pour décoder le flux AV.

3. Système de reproduction de contenu (100) selon la revendication 1,
dans lequel, en réponse au fait que le signal d'horloge généré par un générateur de signal d'horloge (452) inclus dans l'appareil de réception de contenu (120) est plus précis que le signal d'horloge généré par un générateur de signal d'horloge (435) inclus dans l'appareil de reproduction sonore (110),
l'unité de décodage (162) utilise le signal d'horloge généré par le générateur de signal d'horloge (452) inclus dans l'appareil de réception de contenu (120) en guise de signal d'horloge utilisé pour décoder le flux AV,
la première unité de transmission/réception (123) transmet le signal d'horloge généré par le générateur de signal d'horloge (452) inclus dans l'appareil de réception de contenu (120) à l'appareil de reproduction sonore (110), et
la seconde unité de transmission/réception (113) reçoit le signal d'horloge transmis par la première unité de transmission/réception (123).

4. Système de reproduction de contenu (100) selon la revendication 1,
dans lequel l'unité de décodage (162) réinitialise le contenu de stockage de l'unité de stockage (162) ou insère les mêmes données audio et vidéo que les données audio et vidéo immédiatement précédentes sur la base du résultat de décodage du flux AV.

5. Appareil de réception de contenu (120) comprenant :
une unité de démodulation (160) qui reçoit et démodule un contenu d'ondes de radiodiffusion ;
une unité de stockage (161) qui stocke un flux audio-vidéo (AV) en guise de résultat de démodulation par l'unité de démodulation (160) ;
une unité de décodage (162) qui lit, à partir de l'unité de stockage (161), le flux AV stocké dans l'unité de stockage (161), et qui décode le flux AV lu ;
une unité de transmission (125) qui transmet des données audio numériques d'un résultat de décodage par l'unité de décodage (162) à un appareil de reproduction sonore (110) par l'intermédiaire d'une voie de transmission ;
un moyen permettant de recevoir une requête sur une capacité d'horloge maîtresse de l'appareil de réception de contenu (120) à être une horloge maîtresse pour l'appareil de reproduction sonore (110), et permettant de transmettre en réponse une indication d'horloge maîtresse à l'appareil de reproduction sonore (110) ; et
une unité de transmission/réception (123) capable de transmettre/recevoir un signal d'horloge utilisé pour décoder le flux AV par l'unité de décodage (162) à/en provenance de l'appareil de reproduction sonore (110) par l'intermédiaire de la voie de transmission en réponse aux commandes d'horloge transmises par et reçues au niveau de l'appareil de réception de contenu (120), si l'indication d'horloge maîtresse indique que l'appareil de réception de contenu (120) ne peut pas être l'horloge maîtresse, et si l'appareil de reproduction sonore (110) n'est pas capable de recevoir et/ou synchroniser un signal d'horloge, alors l'appareil de réception de contenu (120) est conçu pour recevoir une indication en provenance de l'appareil de reproduction sonore (110) sur le fait que l'appareil de reproduction sonore (110) doit être l'horloge maîtresse,
si l'appareil de reproduction sonore (110) est l'horloge maîtresse, alors l'unité de transmission/réception (123) est conçue pour
recevoir le signal d'horloge en provenance de l'appareil de reproduction sonore (110) afin d'utiliser le signal d'horloge en guise de signal d'horloge de référence pour décoder le flux AV afin de reproduire les données audio numériques, et
transmettre les données audio numériques reproduites à l'appareil de reproduction sonore (110),
si l'appareil de réception de contenu (120) est l'horloge maîtresse, alors l'unité de transmission/réception (123) est conçue pour transmettre le signal d'horloge à l'appareil de reproduction sonore (110) en vue de son utilisation par l'appareil de reproduction sonore (110) pour reproduire les données audio.

6. Appareil de reproduction sonore (110) comprenant :
une unité de réception (115) qui reçoit les données audio numériques transmises par un appareil de réception de contenu (120) par l'intermédiaire d'une voie de transmission ;
un moyen permettant de transmettre à l'appareil de réception de contenu (120) une requête sur une capacité d'horloge maîtresse de l'appareil de réception de contenu (120) à être une horloge maîtresse, et permettant de recevoir en réponse une indication d'horloge maîtresse en provenance de l'appareil de réception de contenu (120) ;
une unité de transmission/réception (113) capable de transmettre/recevoir un signal d'horloge utilisé pour décoder un flux audio-vidéo (AV) par l'appareil de réception de contenu (120) à/en provenance de l'appareil de réception de contenu (120) par l'intermédiaire de la voie de transmission ; et
une unité de contrôle conçue pour déterminer, s'il est déterminé à partir de l'indication d'horloge maîtresse que l'appareil de réception de contenu (120) est prêt à devenir l'horloge maîtresse, si l'appareil de reproduction sonore (110) est capable de recevoir et/ou synchroniser un signal d'horloge ; et
une unité de transmission (112) conçue pour transmettre, s'il est déterminé que l'appareil de reproduction sonore (110) n'est pas capable de recevoir et/ou synchroniser un signal d'horloge, une indication à l'appareil de réception de contenu (120) sur le fait que l'appareil de reproduction sonore (110) doit être l'horloge maîtresse,
si l'appareil de reproduction sonore (110) est l'horloge maîtresse,
alors l'unité de transmission/réception (113) est conçue pour
transmettre le signal d'horloge à l'appareil de réception de contenu (120) en vue de son utilisation en guise de signal d'horloge de référence pour décoder le flux AV afin de reproduire les données audio numériques, et
recevoir les données audio numériques reproduites en provenance de l'appareil de réception de contenu (120),
si l'appareil de réception de contenu (120) est l'horloge maîtresse, alors l'unité de transmission/réception (113) est conçue pour recevoir le signal d'horloge en vue de son utilisation par l'appareil de reproduction sonore (110) pour reproduire les données audio.

7. Procédé de reproduction de contenu, comprenant les étapes consistant à :
recevoir et démoduler, par un appareil de réception de contenu (120), un contenu d'ondes de radiodiffusion ;
stocker, par l'appareil de réception de contenu (120), un flux audio-vidéo (AV) en guise de résultat de démodulation ;
lire et décoder, par l'appareil de réception de contenu (120), le flux AV stocké ;
transmettre, par l'appareil de réception de contenu (120), des données audio numériques d'un résultat de décodage à un appareil de reproduction sonore (110) par l'intermédiaire d'une voie de transmission ;
recevoir une requête sur une capacité d'horloge maîtresse de l'appareil de réception de contenu (120) à être une horloge maîtresse pour l'appareil de reproduction sonore (110) ;
transmettre en réponse une indication d'horloge maîtresse à l'appareil de reproduction sonore (110) ;
transmettre/recevoir, par l'appareil de réception de contenu (120), un signal d'horloge utilisé pour décoder le flux AV à/en provenance de l'appareil de reproduction sonore (110) par l'intermédiaire de la voie de transmission en réponse aux commandes d'horloge transmises et reçues par l'appareil de réception de contenu (120) ;
recevoir, par l'appareil de reproduction sonore (110), les données audio numériques transmises par l'intermédiaire de la voie de transmission ;
transmettre à l'appareil de réception de contenu (120) une requête sur une capacité d'horloge maîtresse de l'appareil de réception de contenu (120) à être une horloge maîtresse ;
recevoir en réponse une indication d'horloge maîtresse en provenance de l'appareil de réception de contenu (120) ;
et
déterminer, s'il est déterminé à partir de l'indication d'horloge maîtresse que l'appareil de réception de contenu (120) est prêt à devenir l'horloge maîtresse, si l'appareil de reproduction sonore (110) est capable de recevoir et/ou synchroniser un signal d'horloge ; et
transmettre, s'il est déterminé que l'appareil de reproduction sonore (110) n'est pas capable de recevoir et/ou synchroniser un signal d'horloge, une indication à l'appareil de réception de contenu (120) sur le fait que l'appareil de reproduction sonore (110) doit être l'horloge maîtresse,
si l'appareil de reproduction sonore (110) est l'horloge maîtresse, alors le procédé consiste à
transmettre le signal d'horloge de l'appareil de reproduction sonore (110) à l'appareil de réception de contenu (120),
recevoir le signal d'horloge au niveau de l'appareil de réception de contenu (120), en utilisant le signal d'horloge en guise de signal d'horloge de référence pour décoder le flux AV afin de reproduire les données audio numériques,
transmettre, en provenance de l'appareil de réception de contenu (120), les données audio numériques reproduites à l'appareil de reproduction sonore (110),
si l'appareil de réception de contenu (120) est l'horloge maîtresse, alors le procédé consiste à
transmettre le signal d'horloge de l'appareil de réception de contenu (120) à l'appareil de reproduction sonore (110), et
recevoir le signal d'horloge au niveau de l'appareil de reproduction sonore (110) en vue de son utilisation par l'appareil de reproduction sonore (110) pour reproduire les données audio.

8. Programme amenant un appareil de réception de contenu à fonctionner selon le procédé selon la revendication 7.
